(19) Europäisches Patentamt
European Patent Office
Office européen des brevets

(11) EP 1 613 475 B1

(12) **EUROPEAN PATENT SPECIFICATION**

(45) Date of publication and mention of the grant of the patent:
**15.02.2012 Bulletin 2012/07**

(21) Application number: **04726641.6**

(22) Date of filing: **08.04.2004**

(51) Int Cl.:
***B41J 2/21*** *(2006.01)* ***C09D 11/00*** *(2006.01)*

(86) International application number:
**PCT/JP2004/005062**

(87) International publication number:
**WO 2004/091916 (28.10.2004 Gazette 2004/44)**

(54) **IMAGE FORMING APPARATUS, IMAGE FORMING PROCESS, RECORDING COMPOSITION, AND CARTRIDGE**

BILDERZEUGUNGSVORRICHTUNG, BILDERZEUGUNGSVERFAHREN, AUFZEICHNUNGSZUSAMMENSETZUNG UND PATRONE

APPAREIL DE FORMATION D'IMAGE, PROCEDE DE FORMATION D'IMAGE, COMPOSITION D'ENREGISTREMENT ET CARTOUCHE

(84) Designated Contracting States:
**DE ES FR GB IT NL**

(30) Priority: **17.04.2003 JP 2003112618**
**11.07.2003 JP 2003195760**

(43) Date of publication of application:
**11.01.2006 Bulletin 2006/02**

(73) Proprietor: **Ricoh Company, Ltd.**
**Tokyo 143-8555 (JP)**

(72) Inventor: **ADACHI, Hiroshi**
**Midori-ku,**
**Yokohama-shi**
**Kanagawa 2260013 (JP)**

(74) Representative: **Barz, Peter et al**
**Meissner Bolte**
**Widenmayerstrasse 48**
**80538 München (DE)**

(56) References cited:

| | |
|---|---|
| **EP-A- 1 123 806** | **EP-A- 1 266 942** |
| **JP-A- 8 216 416** | **JP-A- 2001 239 752** |
| **JP-A- 2002 121 434** | **US-A- 6 116 711** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 613 475 B1

## Description

Technical Field

The present invention relates to image forming apparatuses which spray or eject a recording composition to form an image, being represented by ink-jet apparatuses. In particular, it relates to image forming apparatuses which utilizes a recording composition in which a colorant is dispersed, and image forming processes using these apparatuses.

Background Art

Ink-jet recording process, in which droplets of ink is sprayed to record an image, has a simple printing mechanism and therefore is advantageous in that the costs are low, apparatuses are compact, and noise is low. Further, by using an ink containing a dye, the process can yield printed matters having high color saturation and vivid color tone.

However, when such ink containing a dye is printed on a plain paper sheet, the ink vehicle will bleed along the fibers and so will the dye. Then, the outline of characters will become jagged, and the image quality will be poor (this may be referred to as "feathering" hereinafter). In addition, the printed matters produced with an ink containing a dye are vulnerable to water adhesion, as the dye dissolves in water and deforms the image. Moreover, when exposed to light such as sunlight, the dye dissociates through light absorption and color fading occurs. As described above, when an ink utilizing a dye is used, some problems as shown above will arise in exchange for vivid color tone.

To overcome such problems, inks using a pigment instead of a dye as the colorant have been proposed. Since the colorant is a pigment, it does not bleed even if the ink vehicle bleeds along the fibers when the ink is printed on a plain paper sheet, as the dispersed pigment is trapped in spaces between the fibers or aggregates due to the change of pH. Feathering is therefore substantially improved. Also, water resistance is improved since pigments are hardly soluble in water, and light fastness is improved since they are formed of particles and thus are resistant to color fading in appearance.

However, pigment-dispersed inks are disadvantageous in that deposition or precipitation can be easily formed when the solvent volatilizes. Therefore, when the pigment deposits near the nozzle, it will affect discharging of the ink. If the pigment deposits near the nozzle, the ink is pulled toward the side of the deposition when the ink is discharged, causing the discharge direction to deviate from its intended direction, a phenomenon known as "discharge bending." The deposition of the pigment is particularly troublesome for a thermal ink-jet head, which employs thermal energy to spray the ink. A thermal ink-jet head gains discharging energy by applying heat to the ink and causing it to bubble. When this discharging operation is repeatedly performed, the temperature near the nozzle increases, and this will eventually cause a large amount of the volatile component of the ink to evaporate and form deposition of the pigment. Accordingly, discharge bending of ink due to pigment deposition is likely to happen when consecutive printing is performed with a thermal ink-jet head.

Confronting this issue, several proposals have been made to date. Such proposals include, for example, an aqueous ink in which the iron content of the ink is 0.3 ppm or less (Japanese Patent Application Laid-Open (JP-A) No. 08-311379), an aqueous ink in which the barium content of the ink is 4 ppm or less (JP-A No. 08-311380), an aqueous ink in which the fatty acid content of the ink is 0.3% by weight or less (JP-A No. 09-003374), and an aqueous ink in which the fatty acid ester content of the ink is 0.6% by weight or less (JP-A No. 09-003375). According to these proposals, aggregation of ink is reduced by decreasing impurities in the ink.

Other proposals include, for example, an ink-jet printing process utilizing an ink containing pigment particles having on their surfaces a sulfur-containing dispersibility-imparting group, a penetrating (wetting) agent, and water (JP-A No. 2001-287455); and an ink for ink-jet containing pigment particles having on their surfaces a sulfur-containing dispersibility-imparting group, an aqueous organic solvent having a surface tension of 40 mN/m or more at 20 °C, and water (JP-A 2001-254033). According to these proposals, discharge stability of the ink can be improved.

However, these proposals do not consider establishing both high-speed printing and inhibition of discharge bending simultaneously. The following proposals deal with the simultaneous establishment of both high-speed printing and discharge bending inhibition. An ink-jet recording process using an ink containing a pigment, a dispersant, and a solvent, in which an average diameter of the pigment is less than 100 nm and the volume of minute droplets is 6 pl or less (JP-A No. 2001-239751); and an ink-jet recording process which uses a head operating at an operation frequency of 15 kHz or more and discharges an ink containing a pigment, a dispersant, and a solvent, in which an average diameter of the pigment is less than 100 nm (JP-A No. 2001-239744) have been proposed According to these proposals, the direction of the discharged ink does not bend even if the operation frequency is increased

However, while these proposals consider inhibiting discharge bending at high operation frequencies, they do not take into account the discharge bending of ink when the number of scanning with the head is reduced for high-speed printing, in particular when an image is formed with so-called one-pass printing in which rows of dots aligned along the main scanning direction is printed in a single head scanning. The above-mentioned proposal is therefore not sufficient

regarding inhibition of discharge bending in one-pass printing, and the current situation is that there are needs for further improvement and development.

EP-A1-1266942 relates to an ink set for ink-jet recording that comprises a plurality of inks containing coloring materials insoluble in water. The water-based ink set for ink-jet recording comprises a black ink and a color ink, wherein the black ink contains a carbon black as a coloring material having a volume average particle diameter determined by dynamic light scattering of not less than 50 nm, the color ink contains a pigment as a coloring material having a volume average particle diameter determined by dynamic light scattering of not more than 60 nm, and an accumulative 90% particle diameter of volume particle size distribution of not more than 100 nm, the volume average particle diameter of the carbon black of the black ink is larger than the volume average particle diameter of the pigment of the color ink, and the black ink has a surface tension higher than that of the color ink.

US-A-6116711 describes a printer which enables flexible printing control to be performed in conformity with the capacity of a memory installed by performing printing by multiscan printing using a buffer memory having the capacity decided or performing printing in which printing using all ink discharge nozzles of the printhead is completed by a single scan of the printhead

Disclosure of the Invention

An object of the present invention is to obtain an image forming apparatus and an image forming process which do not cause discharge bending at high-speed printing using a pigment ink and which can form a vivid image with no white streaks. In particular, an object is to obtain an image forming apparatus and an image forming process which do not cause discharge bending even under consecutive use of a thermal ink-jet head and which can form a vivid image with no white streaks. In addition, another object of the present invention is to obtain an image forming apparatus and an image forming process which can form an image satisfying water resistance and light fastness simultaneously.

To perform high-speed printing with an ink-jet recording process, the so-called one-pass printing is effective, in which rows of dots aligned along the main scanning direction is printed in a single head scanning. In a process in which a head mounted on a carriage is moved right and left to scan while a sheet of paper is moved relatively so as to form an image, the one-pass printing prints the rows of dots along the main scanning direction in one head scanning and does not print them over gain. Therefore, it is possible to minimize the number of head scanning and reduce the time needed for printing a single sheet, enabling high-speed printing.

This one-pass printing is advantageous for its capability of high-speed printing, but when discharge bending of the ink occurs, it may lead to an image defect since it is impossible to replace the failed nozzle with another nozzle having no discharge bending to form dots. Particularly, when using an ink containing a dispersion of a colorant such as pigment, discharge bending can easily occur since the colorant is likely to deposit, and it is highly possible that this leads to major image defects such as white streaks as shown in FIG. 2.

Referring to FIG. 2, the left-side patterns 215 are made by normal nozzles (no discharge bending and no discharge failure) and the right-side patters 217 by abnormal patterns (with discharge bending and discharge failure). Discharge bending 211 and discharge failure can be observed.

On the other hand, in a so-called multi-pass process, in which the rows of dots along the main scanning direction are formed through several scanning operations, different nozzles print a single row of dots along the main scanning direction. Therefore, even if discharge bending occurs in one of the nozzles, white streaks will not be excessively noticeable and correction may be possible if other nozzles are functioning. With one-pass printing, however, failure of one nozzle will result in a major image defect, and therefore discharge bending must be inhibited at a higher level. No studies have been conducted on inhibiting discharge bending to prevent image defects in one-pass printing, being a new point of view and challenge.

The inventors have found that in an image forming apparatus as described above, the deposition of colorant can be inhibited by limiting the average diameter of the colorant to 70 nm or less and that vivid images can be formed at high speed without the occurrence of discharge bending even with one-pass printing, and thus the invention has been completed.

Accordingly, the present invention provides an image forming apparatus 1 comprising a recording head 3, 90 which sprays a recording composition containing a colorant dispersion toward a recording medium 91, which apparatus forms an image on the recording medium by controlling the recording head to scan relatively to the recording medium, wherein the average diameter of the colorant is 70 nm or less, characterized in that the rows of dots of the image aligned along the main scanning direction are formed with a single scan, and the recording head has a discharge orifice having an opening, and the average diameter Dp ($\mu$m) of the colorant particles and a size Dn ($\mu$m) of the opening of the discharge orifice satisfy the formula:

$$Dp / Dn \leq 0.003.$$

It is presumed that reducing the diameter of the colorant can inhibited its aggregation for the following reason. Specifically, the colorant is contained in the ink (recording composition) in a dispersed state, in which an electric repulsive force is effecting among the colorant particles, preventing coalescence and aggregation of the colorant particles. This repulsive force is generally based on electric charges of electrically charged groups such as an anionic group of the colorant itself, an anionic group of a dispersant surrounding the colorant, or the like. When the volatile solvent of the ink evaporates, the concentration of the colorant increases, leading to collisions between the colorant particles as they overcome the energy barrier of the repulsive force between them. A portion of the colliding colourant particles will result in unification, initiating aggregation When this aggregation takes place near the nozzle and its size becomes significant, discharge bending occurs in which the ink is pulled toward the aggregate when it is discharged into the air.

A certain amount of colorant is added to an ink to obtain a certain image density. When inks having the same amount of added colorant are compared, the total surface area of the colorant becomes larger as the colorant diameter gets smaller. When the compositions of the surface of the colorants are the same and assuming that the density of charged groups (number per unit area) on the colorant surface is constant with respect to the diameter of colorant particle, the total charge of the whole colorant in the ink becomes larger as the colorant diameter gets smaller, and therefore it is presumed that the repulsive force among the colorant particles in the ink as a whole becomes larger. For this reason, it is presumed that even if the conditions are such that the solvent of the ink evaporates and the colorant is likely to deposit, the ink according to the present invention is resistant to such deposition, and therefore discharge bending of ink does not occur.

Moreover, the following may be applicable as another explanation. The assumption is that when the probabilities of collision between colorant particles are the same, the unification speeds of the colorant particles are also the same. In other words, assuming that the numbers of unifying colorant particles per unit time are the same, it is considered that the smaller the colorant particles are, the smaller the size of aggregates formed in a certain period of time becomes. Therefore, the colorant with smaller average diameter will have smaller size of depositing aggregate, leading to resistance to discharge bending.

As described above, by limiting the average diameter of the colorant to 70 nm or less and using an image forming apparatus which forms rows of dots aligned along the main scanning direction in a single scan, is it possible to obtain at high speed vivid images which are free of white streaks and density fluctuation.

A recording composition is used in an image forming apparatus comprising a recording head which sprays a recording composition containing a colorant dispersion toward a recording medium, which apparatus controls the recording head to scan relatively to the recording medium and forms rows of dots of an image aligned along the main scanning direction with a single scan on the recording medium, wherein the average diameter of the colorant in the recording medium is 70 nm or less.

Recorded matter comprises an image formed by the recording composition on a recording material.

A cartridge houses the recording composition in a container.

Brief Description of Drawings

FIG. 1 is a schematic view illustrating one-pass printing of ink-jet recording process.

FIG. 2 is a schematic view of nozzle check patterns printed in Examples for illustrating image defects in one-pass printing.

FIG. 3 is a schematic view of an example of the image forming apparatus according to the present invention.

FIG. 4 is a perspective view of an example of a cartridge.

FIG. 5 is a sectional view of the cartridge of FIG. 4.

FIGS. 6A, 6B, 6C, and 6D are schematic views illustrating the mechanics of a bubble jet (registered trademark in Japan) recording head.

FIGS.. 7A, 7B, 7C, 7D, 7E, 7F, and 7G are schematic views illustrating the principle of ink-droplet discharging of a bubble jet (registered trademark in Japan) recording head.

FIGS. 8A and 8B are schematic views illustrating the mechanics of another bubble jet (registered trademark in Japan) recording head.

FIG. 9 is a view of an example of the ink jet head used with the present invention.

FIG. 10 is a view of an example in which three colored inks are supplied to the recording head of FIG. 9.

FIG. 11 is a schematic view showing an example of a configuration of a serial printer.

FIG. 12 is a view of an example in which four colored inks are supplied to the recording head of FIG. 9.
FIG. 13 is a partial view of another ink jet head having four colored-ink discharging rows.
FIG. 14 is a schematic view showing an example of a configuration of a 4-color ink jet head.
FIGS.15A and 15B are other schematic views showing an example of a configuration of a 4-color ink jet head.

Best Mode for Carrying Out the Invention

(Image Forming Apparatus, Image Forming Process, and Recording Composition)

The image forming apparatus according to the present invention comprises a recording head which contains a recording composition containing a colorant dispersion and which sprays the recording composition toward a recording medium, and forms an image on the recording medium by allowing the recording head to scan relatively to the recording medium, wherein the average diameter of the colorant in the recording composition is 70 nm or less and the rows of dots of the image aligned along the main scanning direction are formed with a single scan.
The image forming apparatus according to the present invention comprises an image forming step in which a recording head which contains a recording composition containing a colorant dispersion and which sprays the recording composition toward a recording medium is controlled to scan relatively to the recording medium to form an image on the recording medium, wherein the average diameter of the colorant in the recording composition is 70 nm or less and the rows of dots of the image aligned along the main scanning direction are formed with a single scan.
The recording composition is used in the image forming apparatus and image forming process according to the present invention.
The details of the recording composition used by the present invention will become apparent through the description below of the image forming apparatus and image forming process of the present invention.
The average diameter of the colorant particles in the recording composition is 70 nm or less, preferably 50 nm or less, and more preferably 30 nm or less. When the diameter of the colorant particles is 70 nm or less, the repulsive force between the colorant particles will be large enough to inhibit colorant deposition and decrease the size of depositing aggregates, and therefore discharge bending is less likely to occur. Here, if the average diameter of the colorant particles is 50 nm or less, the total surface area of the colourant particles will be even larger, causing the repulsive force to be even larger, resulting in further increase of the effect, and therefore occurrence of white streaks is limited and also that of density fluctuation. When the average diameter of the colorant particles is 30 nm or less, an even greater effect is achieved, so that white streaks are controlled and density fluctuation is controlled at a higher level. The lower limit of the average diameter is desirably 1 nm or more. As described above, the use of pigment as the colorant improves light fastness. However, even if the colorant is a pigment, when the average diameter is less than 1 nm, light fastness will decrease and be close to that of a dye.
In accordance with the present invention, the so-called one-pass printing, in which rows of dots aligned along the main scanning direction are formed in a single scan, is the forming of a single row of dots aligned along the main scanning direction by a single recording head scanning, as shown in FIG.1, where the main scanning direction is defined as the direction in which the recording head moves relatively to the recording medium. Since one nozzle forms one row of dots along the main scanning direction with one head scanning, the highest printing speed can be achieved.
With reference to FIG.1, an arrow 201 indicates the main scanning direction, and an arrow 203 the secondary scanning direction. A nozzle surface 205 moves (scans) in the main scanning direction to form rows of dots with ink. As shown, each row along the main scanning direction is formed by ink discharged by from the corresponding nozzle.
Moreover, by adjusting the recording composition to contain 10% by weight or more of an aqueous organic solvent, dispersion stability is secured even if the volatile components of the ink evaporates, since the aqueous organic solvent disperses the colorant. Accordingly, the colorant will not deposit, and therefore discharge bending of the ink is inhibited.
To prevent drying of the recording composition, or for objectives such as improving dissolving stability and dispersibility of a compound according to the present invention, an aqueous organic solvent may be used. Examples of aqueous organic solvent include ethylene glycol, diethylene glycol, triethylene glycol, polyethylene glycol, polypropylene glycol, 1,5-pentanediol, 1,5-hexanediol, glycerol, 1,2,6-hexanetriol, 1,2,4-butanetriol, 1,2,3-butanetriol, petriol (3-methyl-1,3,5-pentanetriol) and other polyhydric alcohols; ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, propylene glycol monoethyl ether and other polyhydric alcohol alkyl ethers; ethylene glycol monophenyl ether, ethylene glycol monobenzyl ether and other polyhydric alcohol aryl ethers; N-methyl-2-pyrrolidone, N-hydroxyethyl-2-pyrrolidone, 2-pyrrolidone, 1,3-dimethylimidazolidinone, ε-caprolactam and other nitrogen-containing heterocyclic compounds; formamide, N-methylformamide, N,N-dimethylformamide and other amides; monoethanolamine, diethanolamine, triethanolamine, monoethylamine, diethylamine, triethylamine and other amines; dimethyl sulfoxide, sulfolane, thiodiethanol and other sulfur-containing compounds; propylene carbonate, ethylene carbonate,

and γ-butyrolactone. With water, each of these solvents may be used alone or in combination of two or more.

Among these, particularly preferable are diethylene glycol, glycerol, 1,2,6-hexanetriol, 1,2,4-butanetriol, petriol (3-methyl-1,3,5-pentanetriol), 1,5-pentanediol, N-methyl-2-pyrrolidone, N-hydroxyethyl-2-pyrrolidone, 2-pyrrolidone, and 1,3-dimethylimidazolidinone. By using at least one of these, it is possible to gain excellent effects on the prevention of spraying properties failure due to moisture evaporation, high dissolving properties, and high dispersion properties.

In addition, by adjusting the static surface tension of the ink at 25 °C to 25 mN/m to 50 mN/m, when a slight discharge bending occurs, the ink bleeds moderately and covers the portion which would be a white streak caused by the discharge bending, and therefore the white streak will not be apparent. If the static surface tension exceeds 50 mN/m, bleeding of the ink is excessively inhibited and covering up of the image defect by discharge bending is insufficient, resulting in forming of white streaks. On the other hand, if the static surface tension is less than 25 mN/m, repellency of the nozzle surface will be insufficient, the ink will bleed out from the nozzle orifice to the nozzle surface, and therefore meniscus will not form. Accordingly, formation of ink particles is inhibited, causing discharge bending.

Moreover, by adjusting the viscosity of the ink at 25 °C to 2 mPa·s to 30 mPa·s, when a slight discharge bending occurs, the ink bleeds moderately and covers the portion which would be a white streak caused by the discharge bending, and therefore the white streak will not be apparent. If the viscosity exceeds 30 mPa·s, bleeding of the ink is excessively inhibited and covering up of the image defect by discharge bending is insufficient, resulting in forming of white streaks. On the other hand, if the viscosity is less than 2 mPa·s, the bleeding of the ink will be so much that it will cause bleeding of characters, color mixing, or the like and will greatly deteriorate image quality.

Any colorant having a color other than black may suitably be used in accordance with the present invention provided that it can be dispersed in a recording composition. Representative examples include pigment, oil dye, and the like. These colorants may preferably use one color selected from cyan, magenta, yellow, red, green, blue, and white. For the present invention, the use of a pigment is preferable particularly since deposition does not occur at the nozzle, and by using a pigment, light fastness and water resistance of the ink will be better than using a dye. Specific examples of pigments are listed below. These pigments may be used as a mixture of two or more of them, or as a mixture with a dye or other coloring materials. These may be added in an amount which will preserve the effect of the present invention.

Examples of the organic pigments include azo, phthalocyanine, anthraquinone, dioxazine, indigo, thioindigo, perylene, isoindolenone, aniline black, azomethine, Rhodamine B lake, carbon black pigments, and the like. Examples of the inorganic pigments include iron oxide, titanium oxide, calcium carbonate, barium sulfate, aluminum hydroxide, barium yellow, Prussian blue, cadmium red, chrome yellow, metal powders, and the like.

As described above, the average diameter of these pigments to be used is 70 nm or less to inhibit deposition. To further inhibit deposition, it is preferably 50 nm or less, and more preferably 30 nm or less. Since discharge bending becomes less as the average diameter gets smaller, the probability of white streak occurrence will be less and image density fluctuation will also decrease. If it exceeds 70 nm, pigment deposition will increase, causing discharge bending and subsequent white streak occurrence.

The ratio of the size of the discharging orifice of an ink-jet head (hereinafter "nozzle diameter") to the diameter of the colorant particle (hereinafter "particle diameter") affects image quality.

Deposits become larger as the particle diameter increases, but if the nozzle diameter is large enough, forming of deposits will not greatly affect the direction in which the recording composition is discharged in the air. However, even if the same recording composition is used, the effect of the deposit serving as an obstacle grows as the nozzle diameter decreases, and therefore significantly affects the direction of the recording-composition flying path. As a result, discharge bending is likely to occur as the nozzle diameter decreases even if the same recording composition is used. For the present invention, the method to reduce discharge bending has been studied, and the result is that by adjusting the average diameter of the colorant Dp (μm) and the size of the opening of discharging orifice of the recording head Dn (μm) so that they satisfy $Dp/Dn \leq 0.003$, the discharge bending of recording composition can be reduced effectively and vivid printed matters without density fluctuation and white steaks can be obtained with one-pass printing.

In addition, the discharge velocity of the recording composition also affects image quality. When a deposit of the same size is formed, if the discharge velocity V is at or above a certain level, discharge bending can be reduced. The discharge velocity is preferably from 2.0 m/s to 30.0 m/ s, and more preferably from 4.0 m/ s to 25.0 m/ s. If it is 2.0 m/ s or more, the locational precision of point of impact of the recording composition will be high, and if it is 4.0 m/s or more, the locational precision of point of impact will be even higher and it will be possible to make the recording composition hit where it is aimed at even with a super high-speed printing. On the other hand, if it is below 2.0 m/s, the fluctuation of the distance between the recording medium and the head greatly affects the locational precision of the point of impact, and the point of impact will be off the targeted point. Therefore, a problem such as winding thin lines may occur. On the other hand, if it is 30.0 m/ s or less, the occurrence of satellite particles (unwanted discharged particles formed by fragmentation of discharged recording composition) is inhibited, and nearly completely round pixels are formed. If it is 25.0 m/ s or less, the formation of satellite particles is further inhibited and pixels which are more closer to complete round are formed. If it exceeds 30.0 m/s, satellite particles will be formed, causing pixels to become elliptical, or fragmented, and therefore thin lines will be blurred or duplicated.

A surfactant may be added as a penetrating (wetting) agent to the recording composition of the present invention. The wetting agents are used for improving wettability between the recording composition and the recording medium and controlling the penetration rate. Compounds represented by following Formulae (I), (II), (III) and (IV) are preferred as the wetting agent. More specifically, polyoxyethylene alkylphenyl ether surfactants of Formula (I), acetylene glycol surfactants of Formula (II), polyoxyethylene alkyl ether surfactants of Formula (III), and polyoxyethylene polyoxypropylene alkyl ether surfactants of Formula (IV) can reduce the surface tension of the treating liquid composition and improve the wettability to thereby increase the penetration rate.

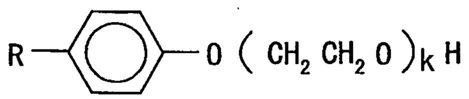

• • • (I)

In Formula (I), "R" represents a linear or branched hydrocarbon chain having 6 to 14 carbon atoms; and "k" represents an integer of 5 to 20.

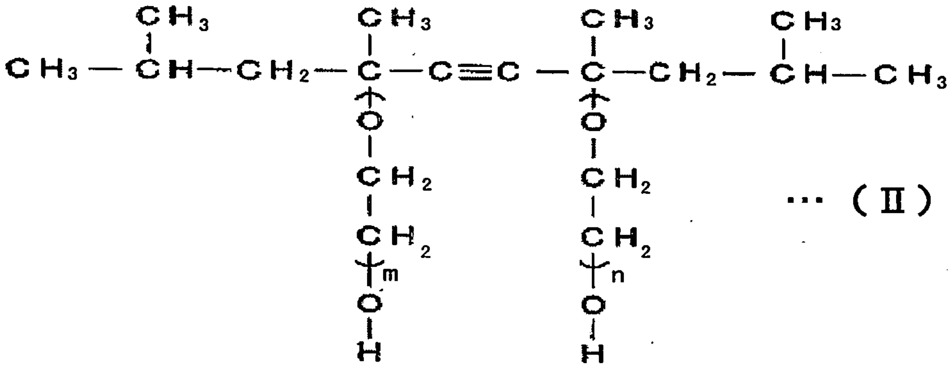

••• (II)

In Formula (II), "m" and "n" are each an integer of 20 or less, and the total of "m" and "n" is more than 0 and equal to or less than 40.

$R\text{-}(OCH_2CH_2)nH$ (III)

In Formula (III), "R" represents a linear or branched hydrocarbon chain having 6 to 14 carbon atoms; and "n" represents an integer of 5 to 20.

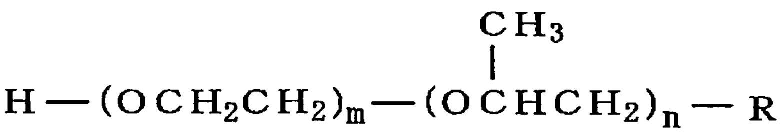

• • • (IV)

In Formula (IV), "R" represents a linear or branched hydrocarbon chain having 6 to 14 carbon atoms; and "m" and "n" independently represent an integer of 1 to 20.

In addition to the compounds of Formulae (I), (II), (III) and (IV), the wetting agents also include diethylene glycol monophenyl ether, ethylene glycol monophenyl ether, ethylene glycol monoallyl ether, diethylene glycol monophenyl ether, diethylene glycol monobutyl ether, propylene glycol monobutyl ether, tetraethylene glycol chlorophenyl ether and other alkyl and aryl ethers of polyhydric alcohols, polyoxyethylene-polyoxypropylene block copolymers and other nonionic surfactants, fluorine-containing surfactants, ethanol, 2-propanol and other lower alcohols, of which diethylene glycol monobutyl ether is preferred.

An antiseptic-antimold agent may be added to the recording composition according to the present invention for inhibiting decay or growth of molds. Examples of such antiseptic-antimold agents include sodium dehydroacetate, sodium sorbate, sodium 2-pyridinethiol-1-oxide, isothiazoline compounds, sodium benzoate, sodium pentachlorophenol, and the like

An anticorrosive may be added to the recording composition according to the present invention for preventing corrosion of the members to come into contact with the composition. Examples of the anticorrosive include acidic sulfites, sodium thiosulfate, ammonium thiodiglycolate, diisopropylammonium nitrite, pentaerythritol tetranitrate, dicyclohexylammonium nitrite, and the like.

A pH adjuster may be added to the recording composition according to the present invention for increasing storage stability of the composition. Any substance may be used as the pH adjuster provided that it can adjust pH to a certain level without adversely affecting the ink to which it is added. Examples of the pH adjuster include diethanolamine, triethanolamine and other amines; lithium hydroxide, sodium hydroxide, potassium hydroxide and other alkali metal hydroxides; ammonium hydroxide, quaternary ammonium hydroxides, quaternary phosphonium hydroxides; lithium carbonate, sodium carbonate, potassium carbonate and other alkali metal carbonates; and the like.

An antifoaming agent may be added to the recording composition used by the present invention for inhibiting foaming of the composition. Among the antifoaming agents, silicone antifoaming agents are preferably used. Generally, types of silicone antifoaming agents include oil, compound, self-emulsifying, and emulsion. Considering the use in an aqueous medium, a self-emulsifying or emulsion silicone antifoaming agent is desirable to secure reliability. Modified silicone antifoaming agents, such as amino-modified, methacryl-modified, polyether-modified, alkyl-modified, higher-fatty-acid-ester-modified, alkylene-oxide-modified silicone antifoaming agents, or the like, may also be used.

Commercially available silicone antifoaming agents include, for example, those by Shin-Etsu Chemical Co., Ltd. (for example, KS508, KS531, KM72, KM85, and the like), those by Dow Corning Toray Silicone Co., Ltd. (for example, Q2-3183A, SH5510, and the like), those by Nippon Unicar Co., Ltd. (for example, SAG30 and the like), those by Asahi Denka Co., Ltd. (for example, ADEKA NOL series), and the like. The amount of these antifoaming agents to be added to ink may be as little as is effective, but in general, it is desirably in a range of from 0.001% by weight to 3% by weight, and preferably in a range of from 0.005% by weight to 0.5% by weight.

The details of the present invention will be described below with reference to FIG. 3. However, it is to be understood that the present invention is not limited thereto.

FIG. 3 shows an example of the configuration of an image forming apparatus according to the present invention. As shown in FIG. 3, an ink-jet printer 1 comprises ink cartridges 2 each separately containing cyan, magenta, and yellow inks; a recording head 3 having a plurality of nozzles, to which recording head 3 ink is supplied from each ink cartridge 2; a carriage 4 holding the ink cartridges 2 and the recording head 3; a carrier roller 8 which carries recording paper sheets from sheet-feeding trays 5a and 5b or manual feed table 6 which contain recording paper sheets; and an ejecting roller 10 which ejects printed recording paper sheets to catch tray 9. When image data from a host machine are to be printed on a sheet of recording paper, the carriage 4 scans along carriage guide rollers 11 and the recording head 3 discharges ink from its nozzles according to the image data onto the recording paper sheet carried by the carrier roller 8 to a printing section 7, so as to record characters and images.

The recording head which may be used in an apparatus of the present invention will be described next with reference to FIGS. However, it is to be understood that the present invention is not limited thereto.

FIGS. 6A, 6B, 6C, and 6D are views for illustrating an example of a bubble jet (registered trademark in Japan) recording head, in which FIG. 6A is a perspective view of the head, FIG. 6B is a perspective view of a top substrate constituting the head, FIG. 6C is a perspective view of the top substrate seen from the lower side, and FIG. 6D is a perspective view of a heating substrate. In these FIGS., 41 designates the top substrate, 42 the heating substrate, 43 a recording composition inlet, 44 discharge orifices, 45 flow paths, 46 a space for forming a liquid chamber, 47 individual (independent) controlling electrodes, 48 a common electrode, and 49 heating elements. Here, a method such as etching or the like may be used on a glass substrate or a metal substrate to form flow paths 45 or a liquid chamber 46 so as to manufacture the top substrate 41, but the most preferable manufacturing method is plastic molding. Although this is somewhat costly in the beginning to make a mold, since mass production is possible after that, manufacturing cost per unit can be reduced very low.

FIGS. 7A to 7G are schematic views illustrating the principle of ink-droplet discharging with a bubble jet (registered trademark in Japan) method of ink-jet. FIG. 7A shows a steady state, in which ink 50, surface tension, and external pressure are balanced at discharge orifice plane. FIG. 7B shows a state in which the heating element 49 is heated, the surface temperature of the heating element 49 rises sharply until an adjacent layer of ink boils, and small bubbles 51 are formed.

FIG. 7C shows a state in which the heating element 49 quickly heats the adjacent ink layer, which boils instantaneously and forms a boiling layer, and the bubble 51 has grown. At this time, the pressure inside the discharge orifice rises with respect to the amount of growth of the bubble, causing the loss of balance with the external pressure at the discharge orifice plane and the growth of ink pillar 50' at the discharge orifice.

FIG. 7D illustrates a state in which the bubble 51 has grown to its maximum size, and a volume of ink equivalent to that of the bubble is pushed out from the discharge orifice. At this time, no electricity is running through the heating element 49, and the surface temperature of the heating element 49 is declining. The maximum value of the volume of the bubble 51 is reached slightly after the application of electric pulse.

FIG. 7E shows a state in which the bubble 51 is starting to shrink as it is cooled by the ink and the like. At the front end the ink pillar 50' maintains its velocity at which it has been pushed out and moves forward, and at the rear end the ink flows backward from the discharge orifice plane to the inside due to the decrease of internal pressure in the discharge orifice caused by the shrinkage of the bubble, thereby forming a neck 50" in the ink pillar 50'.

FIG. 7F shows a state in which the bubble further shrinks, ink 50 comes to contact with the surface of the heating element 49, and the surface is further quickly cooled. At the discharge orifice plane, the external pressure is higher than the internal pressure of the discharge orifice, causing meniscus to form deep inside the discharge orifice. The front end of the ink pillar is now a droplet 52, which flies toward a recording paper sheet at a speed of 1 m/s to 30 m/s.

FIG. 7G shows that as the ink refills the discharge orifice by capillary action to return to the state of FIG. 7A, the bubble has disappeared completely.

FIGS. 8A and 8B show a head, which is different from the head of FIGS. 6A, 6B, 6C, and 6D, having a nozzle plate 60 at the front end of flow paths. FIG. 8A shows the head before mounting the nozzle plate 60, and FIG. 8B the head after mounting. In this case also, this nozzle plate may be made by perforating a resin (plastic) film with, for example, excimer laser to form nozzles 61, or with methods such as etching, electroforming, or punching a metal. However, the material should be selected appropriately according to its hardness as described below.

The general configuration and principle of the bubble jet (registered trademark in Japan) recording head, which employs heat, has been described. However, the present invention is not limited to this method only, and is applicable to all ink jet recording methods.

FIG. 9 is a view showing an example of an ink jet head according to the present invention. As shown, the head according to the present invention has, on a common heating element substrate 70, a plurality of color-ink discharging elements 71Y, 71M, 71C. In this example, three color inks, yellow (Y), magenta (M), and cyan (C), are shown as the plurality of color inks. It should be noted that in this and the following examples, ink discharging elements and discharge orifices for each color are explained using four or five of them to simplify the FIGS. However, in reality 64 to 512 of them are preferably used.

FIG.10 is a view showing the recording head of FIG. 9 provided with an ink tank 80 which supplies yellow, magenta, and cyan inks separately. It should be noted that this FIG is a conceptual figure showing an ink jet recording head according to the present invention comprising a recording head and an ink tank, and therefore differs from those in reality (described below).

FIG.11 is a view showing a configuration of a so-called serial printer which is equipped with an ink jet head according to the present invention on a carriage to perform recording. In FIG. 11, 90 designates the ink jet head according to the present invention, 91 a recording paper sheet, 92 a carriage, 93 guide rods of the carriage, 94 a screw rod for moving the carriage, 95 a recording paper sheet carrying roller, and 96 a recording paper sheet holding roller. As is known in the art, the recording head 90 (in the example shown, the head shown in FIG.10 is mounted) on which Y, M, and C are arranged vertically (the direction in which the recording paper 91 is carried) in a single row moves back and forth in the direction X in front of the recording paper 91 as it performs recording. According to the present invention, the recording paper is carried in the direction of arrow Y for each single scanning of the carriage. Therefore, the area that is recorded with one scanning is determined by the length of the discharge elements of the head, namely the row of discharge orifices. Since Y, M, and C are aligned vertically in a single row, two or more scanning, which allows overlapping of printed areas of Y, M, and C inks, is required for full-color recording.

The above description has shown an example of three colors, yellow, magenta, and cyan, but according to the present invention, it is also applicable to an ink jet with four colors of discharge orifice rows having black (B) as the additional color. FIG. 12 shows such an example, in which an ink discharge element 71B for black is added to the example shown in FIG. 9.

FIG.13 is another example having four colors of discharge orifice rows. In the example shown in FIGS. 6A to 6D, there is provided an independent ink flow path for each color, but in the example in this figure, flow paths for four colors are molded integrally in a plastic 100. Through this, its assembly cost can be reduced significantly. In this FIG., the four colors are black 102, cyan 104, magenta 106, and yellow 108.

In a typical color ink jet recording apparatus, each recording head like the one shown in FIGS. 6A to 6D is filled with a color ink, and several of these, as many as the colors used, are aligned on a carriage 110. Here, 111B, 111C, 111M, and 111Y designate recording heads for discharging black, cyan, magenta, and yellow color inks, respectively. An arrow 114 designates the direction of carriage movement. One reason for this is to secure reliability through providing for example a measure against clogging. For example, when the configuration is such that the four heads 111B, 111C, 111M, and 111Y each filled with a color ink are independently aligned on the carriage 110 as shown in FIG.10, if clogging occurs on one of the heads, it is possible to restore to the original state by simply replacing that one head.

It includes not only the examples in which a common substrate is used as the heating substrate like the examples of bubble jet (registered trademark in Japan) shown in FIGS. 9 to 13, but also heads filled with multiple colors of ink as shown in FIGS. 15A and 15B, in which 111B, 111C, 111M, and 111Y are integrally laminated. In this example, a common nozzle plate 113 is provided for front ends 112B, 112C, 112M, 112Y of flow paths as shown in FIG. 15A. In this case,

since the common nozzle plate 113 is perforated, assembled, and unified with high precision, dot locational precision for multiple colors will be high and manufacturing costs reduced.

(Cartridge)

The present invention may use a cartridge containing a recording composition with the properties described above. An example of such cartridge is shown in FIGS. 4 and 5. A cartridge 20 contains in a cartridge chassis a liquid absorber 22 to which a recording composition is absorbed. The cartridge chassis is formed of a case having on its upper opening a top member 23 adhered or welded thereto, and may for example be a molded resin. The liquid absorber 22 is a porous material such as a urethane foam which is compressed and inserted into the cartridge chassis, and then is made to absorb the recording composition

A recess 26 is formed on the top member 23, and an air opening 25 is formed near the center thereof The air opening 25 is sealed with a strip sealing member 29. The sealing member 29 is made of a material which blocks air (impermeable to air) such as an aluminum sheet or a polymer sheet with low air permeability. A material for welding is applied on the side of this sealing member 29 which adheres to the case, and it adheres around the recess 26 through heat sealing. The recess 26 is formed for providing a room to prevent the air opening 25 from being clogged by the adhesive material. When using the cartridge, the sealing member 29 is peeled off to allow the cartridge 20 open to air. By opening to air, the air penetrates into space A. By the penetration of air, the recording composition will be supplied to the recording head smoothly during printing.

At the bottom of the case of the cartridge chassis, a liquid supplying orifice 24 is formed to supply the recording composition to the recording head. By inserting a protrusion for preventing liquid leakage, which is formed in cap member 27, into the liquid supplying orifice 24, it is possible to prevent liquid leakage during transportation of the cartridge. Around the liquid supplying orifice 24, an elastic seal ring such as rubber is mounted for sealing the liquid supplying orifice 24 and the liquid-leakage-preventing protrusion when they are joined together. When using the cartridge, the cap member 27 is removed.

On the side of the case of the cartridge chassis, a cartridge-positioning portion is formed so that when the cartridge 20 is mounted on a carriage, the cartridge chassis is fixed at a predetermined position. To detach the cartridge 20 from the carriage for replacement, a finger is inserted in the cartridge detachment recess 31, and the finger is placed on a cartridge detachment finger receiving portion 30a on a side of a cartridge detachment protrusion 30 to pull it off.

Since the image forming process according to the present invention inhibits deposition of the colorant in the ink, it may also be used suitably for a process using ink-spraying means based on thermal energy, namely thermal-head image forming process, which has been likely to suffer ink discharge bending due to such deposition.

(Recorded matter)

The recorded matter is recorded by the ink jet recording apparatus and by the ink jet recording process according to the present invention.

The recorded matter comprises an image formed by the recording ink according to the present invention on a recording material.

The recording material is not limited and may suitably be selected according to the purpose, and examples of the recording material include plain paper, glossy paper, special paper, cloth, film, overhead protection (OHP) sheet, and the like. These may be used alone or in combination of two or more.

The recorded matter may suitably be used for various purposes as a material on which a vivid image is recorded having no white streak and image density fluctuation.

Examples

Hereinafter, the present invention will be described specifically by way of Examples, but it should be understood that the present invention is not limited thereto.

1. Preparation of Recording Compositions

(1) Preparation Example 1 of Yellow Recording Composition

Preparation Example 1 of yellow recording composition was prepared by mixing the following components and filtering the mixture through a 0.8-μm Teflon (registered trademark) filter.

| | |
|---|---|
| C. I. Pigment Yellow 74 | 10.0% by weight |
| 1,3-Butanediol | 7.5% by weight |
| Glycerol | 2.5% by weight |
| DISPERNOL TOC | 1.0% by weight |
| (a surfactant (I) available from NOF Corporation) | |
| 2-Pyrrolidone | 2.0% by weight |
| Sodium dehydroacetate | 0.2% by weight |
| Sodium thiosulfate | 0.2% by weight |
| Ion-exchanged water | balance |

The above composition was adjusted to pH 10.5 with an aqueous LiOH solution before use. The average diameter of the pigment contained in the Preparation Example 1 of yellow composition was 95.0 nm. Properties and other information of each recording composition are shown in Table 1.

(2) Preparation Example 2 of Yellow Recording Composition

Preparation Example 2 of yellow recording composition was prepared by pulverizing and mixing 100 g of Preparation Example 1 of yellow recording composition and 100 g of zirconia beads with rotation in a pot of a ball mill for 3 hours. The average diameter of the pigment contained in the Preparation Example 2 of yellow composition was 65.0 nm.

(3) Preparation Example 3 of Yellow Recording Composition

Preparation Example 3 of yellow recording composition was prepared by pulverizing and mixing 100 g of Preparation Example 1 of yellow recording composition and 100 g of zirconia beads with rotation in a pot of a ball mill for 12 hours. The average diameter of the pigment contained in the Preparation Example 3 of yellow composition was 48.0 nm.

(4) Preparation Example 4 of Yellow Recording Composition

Preparation Example 4 of yellow recording composition was prepared by pulverizing and mixing 100 g of Preparation Example 1 of yellow recording composition and 100 g of zirconia beads with rotation in a pot of a ball mill for 36 hours. The average diameter of the pigment contained in the Preparation Example 4 of yellow composition was 27.0 nm.

(5) Preparation Examples 5 to 8 of Yellow Recording Composition

Preparation Examples 5 to 8 of yellow recording composition were prepared in the same manner as Preparation Example 1 except that the amounts of 1,3-butanediol and glycerol in Preparation Example 1 of yellow recording composition were changed to the amounts as shown in Table 1. The average diameters of the pigment contained in these recording compositions were all 65 nm.

(6) Preparation Example 9 of Yellow Recording Composition

Preparation Example 9 of yellow recording composition was prepared in the same manner as Preparation Example 1 except that the surfactant (I) of Preparation Example 1 of yellow recording composition was not added. The average diameter of the pigment contained in the recording composition was 65 nm.

(7) Preparation Example 10 of Yellow Recording Composition

Preparation Example 10 of yellow recording composition was prepared in the same manner as Preparation Example 1 except that the surfactant (I) of Preparation Example 1 of yellow recording composition was replaced with OLEFIN STG surfactant (II) (available from Nissin Chemical Industry Co., Ltd.). The average diameter of the pigment contained in the recording composition was 65 nm.

(8) Preparation Example 1 of Cyan Recording Composition

Preparation Example 1 of cyan recording composition was prepared by mixing the following components and filtering the mixture through a 0.8-μm Teflon (registered trademark) filter.

| | |
|---|---|
| C. I. Pigment Blue 15:3 | 10.0% by weight |
| 1,3-Butanediol | 7.5% by weight |
| Glycerol | 2.5% by weight |
| DISPERNOL TOC | 1.0% by weight |
| (a surfactant (I) available from NOF Corporation) | |
| 2-Pyrrolidone | 2.0% by weight |
| Sodium dehydroacetate | 0.2% by weight |
| Sodium thiosulfate | 0.2% by weight |
| Ion-exchanged water | balance |

The above composition was adjusted to pH 10.5 with an aqueous LiOH solution before use. The average diameter of the pigment contained in the Preparation Example 1 of cyan composition was 86.0 nm. Properties and other information of each recording composition are shown in Table 2.

(9) Preparation Example 2 of Cyan Recording Composition

Preparation Example 2 of cyan recording composition was prepared by pulverizing and mixing 100 g of Preparation Example 1 of cyan recording composition and 100 g of zirconia beads with rotation in a pot of a ball mill for 3 hours. The average diameter of the pigment contained in the Preparation Example 2 of cyan composition was 63.0 nm.

(10) Preparation Example 3 of Cyan Recording Composition

Preparation Example 3 of cyan recording composition was prepared by pulverizing and mixing 100 g of Preparation Example 1 of cyan recording composition and 100 g of zirconia beads with rotation in a glass pot of a ball mill for 24 hours. The average diameter of the pigment contained in the Preparation Example 3 of cyan composition was 43.0 nm.

(11) Preparation Example 4 of Cyan Recording Composition

Preparation Example 4 of cyan recording composition was prepared by pulverizing and mixing 100 g of Preparation Example 1 of cyan recording composition and 100 g of zirconia beads with rotation in a glass pot of a ball mill for 48 hours. The average diameter of the pigment contained in the Preparation Example 4 of cyan composition was 26.0 nm.

(12) Preparation Examples 5 to 8 of Cyan Recording Composition

Preparation Examples 5 to 8 of cyan recording composition were prepared in the same manner as Preparation Example 1 except that the amounts of 1,3-butanediol and glycerol in Preparation Example 1 of cyan recording composition were changed to the amounts as shown in Table 2. The average diameters of the pigment contained in these recording compositions were all 63 nm.

(13) Preparation Example 9 of Cyan Recording Composition

Preparation Example 9 of cyan recording composition was prepared in the same manner as Preparation Example 1 except that the surfactant (I) of Preparation Example 1 of cyan recording composition was not added. The average diameter of the pigment contained in the recording composition was 63 nm.

(14) Preparation Example 10 of Cyan Recording Composition

Preparation Example 10 of cyan recording composition was prepared in the same manner as Preparation Example 1 except that the surfactant (I) of Preparation Example 1 of cyan recording composition was replaced with

OLEFIN STG surfactant (II) (available from Nissin Chemical Industry Co., Ltd.). The average diameter of the pigment contained in the recording composition was 63 nm.

(15) Preparation Example 1 of Magenta Recording Composition

Preparation Example 1 of magenta recording composition was prepared by mixing the following components and filtering the mixture through a 0.8-μm Teflon (registered trademark) filter.

| | |
|---|---|
| C. I. Pigment Red 122 | 10.0% by weight |
| 1,3-Butanediol | 7.5% by weight |
| Glycerol | 2.5 % by weight |
| DISPERNOL TOC | 1.0% by weight |
| (a surfactant (I) available from NOF Corporation) | |
| 2-Pyrrolidone | 2.0% by weight |
| Sodium dehydroacetate | 0.2% by weight |
| Sodium thiosulfate | 0.2 % by weight |
| Ion-exchanged water | balance |

The above composition was adjusted to pH 10.5 with an aqueous LiOH solution before use. The average diameter of the pigment contained in the Preparation Example 1 of magenta composition was 105.0 nm. Properties and other information of each recording composition are shown in Table 3.

(16) Preparation Example 2 of Magenta Recording Composition

Preparation Example 2 of magenta recording composition was prepared by pulverizing and mixing 100 g of Preparation Example 1 of magenta recording composition and 100 g of zirconia beads with rotation in a pot of a ball mill for 6 hours. The average diameter of the pigment contained in the Preparation Example 2 of magenta composition was 69.0 nm.

(17) Preparation Example 3 of Magenta Recording Composition

Preparation Example 3 of magenta recording composition was prepared by pulverizing and mixing 100 g of Preparation Example 1 of magenta recording composition and 100 g of zirconia beads with rotation in a glass pot of a ball mill for 24 hours. The average diameter of the pigment contained in the Preparation Example 3 of magenta composition was 47.0 nm.

(18) Preparation Example 4 of Magenta Recording Composition

Preparation Example 4 of magenta recording composition was prepared by pulverizing and mixing 100 g of Preparation Example 1 of magenta recording composition and 100 g of zirconia beads with rotation in a glass pot of a ball mill for 72 hours. The average diameter of the pigment contained in the Preparation Example 4 of magenta composition was 29.0 nm.

(19) Preparation Examples 5 to 8 of Magenta Recording Composition

Preparation Examples 5 to 8 of magenta recording composition were prepared in the same manner as Preparation Example 1 except that the amounts of 1,3-butanediol and glycerol in Preparation Example 1 of magenta recording composition were changed to the amounts as shown in Table 3. The average diameters of the pigment contained in these recording compositions were all 69 nm.

(20) Preparation Example 9 of Magenta Recording Composition

Preparation Example 9 of magenta recording composition was prepared in the same manner as Preparation Example 1 except that the surfactant (I) of Preparation Example 1 of magenta recording composition was not added. The average diameter of the pigment contained in the recording composition was 69 nm.

(21) Preparation Example 10 of Magenta Recording Composition

Preparation Example 10 of magenta recording composition was prepared in the same manner as Preparation Example 1 except that the surfactant (I) of Preparation Example 1 of magenta recording composition was replaced with OLEFIN STG surfactant (II) (available from Nissin Chemical Industry Co., Ltd.). The average diameter of the pigment contained in the recording composition was 69 nm.

2. Measurement of Properties of Recording Compositions

(1) Pigment Particle Diameter

Each recording composition was diluted 200- to 1000-fold with ion-exchanged water, and a particle size analyzer (MICROTRAC UPA150, available from Nikkiso Co., Ltd.) was used for the measurement. The value for 50% average diameter (D50) was used as the average diameter of the pigment.

(2) Static Surface Tension

An automatic surface tensiometer (CBVP-Z, available from Kyowa Interface Science Co., Ltd.) was used at 25 °C for the measurement.

(3) Viscosity

A rotational R-type viscometer (Series 500, available from Toki Sangyo Co., Ltd.) was used at 25 °C for the measurement.

3. Evaluation of Image Quality for Examples 1 to 60 and Comparative Examples 1 to 10

(1) Printing Processes

(1.1) Examples 1 to 9 and Comparative Example 1

Preparation Examples 1 to 10 for each of yellow, cyan, and magenta recording compositions as prepared by the methods described in Preparation of Recording Compositions were filled in recording composition cartridges, and these cartridges were attached to the image forming apparatus shown in FIG. 3. The image forming apparatus of FIG. 3 is equipped with a thermal ink jet head. The thermal ink jet head has 150 nozzles with discharge orifice diameter of 30 μm lined up in a row. Discharge orifice diameter of 30 μm corresponds to an area of about 707 $\mu m^2$. The arrangement density of the nozzles is 400 dpi, the size of the heating element is 22 μm by 90 μm, and resistance is 110 Ω. For each recording composition to be discharged, the driving waveform and driving voltage is adjusted while using this recording head so that discharge velocity can be set to a predetermined value. Table 4 shows the discharge velocity for each recording composition. Solid patches of three colors, cyan, yellow, and magenta, were consecutively printed for 500 sheets with one-pass printing to yield printed matters of Examples 1 to 9 and Comparative Example 1 In Examples 1 to 9, Preparation Examples 2 to 10 of yellow recording composition, Preparation Examples 2 to10 of cyan recording composition, and Preparation Examples 2 to10 of magenta recording composition were used in combination of three colors in sequential order. In Comparative Example 1, Preparation Example 1 for each of yellow, cyan, and magenta recording compositions were used.

(1.2) Examples 10 to 27 and Comparative Examples 2 to 19

Printed matters of Examples 10 to 27 and Comparative Examples of 2 to 19 were obtained in the same manner as Example 1 except that recording compositions shown in Tables 5, 6, and 7 and recording heads having discharge orifice diameters shown also in Tables 5, 6, and 7 were used and that the driving waveform and driving voltage were adjusted for each recording composition so that the discharge velocity of each recording composition was as shown in Tables 5, 6, and 7.

(1.3) Examples 28 to 51

Printed matters of Examples 28 to 51 were obtained in the same manner as Example 1 except that recording compositions shown in Table 8 and recording heads having discharge orifice diameters shown also in Table 8 were

used and that the driving waveform and driving voltage were adjusted for each recording composition so that the discharge velocity of each recording composition was as shown in Table 8. It should be noted that discharge orifice diameter of 20 μm corresponds to an area of about 314 $\mu m^2$, and 10 μm to an area of about 79 $\mu m^2$.

(2) Evaluation of Image Quality

A nozzle check pattern shown in FIG. 2 was pointed after printing 500 sheets with one-pass punting. This check pattern yields a printed matter in which marks of ink discharged from all 150 nozzles are aligned independently and serially, and enables one to verify whether the ink is discharged from each nozzle in a correct manner. This check pattern was formed for each of three colors of yellow, cyan, and magenta, and the number of abnormal nozzles, to which discharge bending or discharge failure had occurred, was counted. Results are shown in Table 4.

In addition, a 3-color solid patch on the 500th sheet of the printed matter formed with one-pass printing was observed with the eye for white streaks and density fluctuation, and was evaluated by the standards shown below into five levels. Results are shown Table 4. In addition, nozzles and the surrounding areas were observed with an optical microscope.

5. No white streak, and no density fluctuation

4. No white streak, but slight density fluctuation

3. No white streak, but apparent density fluctuation

2. White streaks visible

1. Wide white streaks visible

[Table 1]

| Yellow composition Preparation Examples | Aqueous organic solvent | | | Surfactant | Average diameter | Surface tension | Viscosity |
|---|---|---|---|---|---|---|---|
| | Total | 1,3-butanediol | glycerol | | | | |
| | wt% | wt% | wt% | | nm | mN/m | mPa·s |
| 1 | 10 | 7.50 | 2.50 | (I) | 95 | 32.0 | 2.50 |
| 2 | 10 | 7.50 | 2.50 | (I) | 65 | 32.0 | 2.50 |
| 3 | 10 | 7.50 | 2.50 | (I) | 48 | 31.5 | 2.68 |
| 4 | 10 | 7.50 | 2.50 | (I) | 27 | 32.4 | 2.89 |
| 5 | 5 | 3.75 | 1.25 | (I) | 65 | 32.6 | 1.89 |
| 6 | 20 | 15.00 | 5.00 | (I) | 65 | 31.5 | 4.89 |
| 7 | 40 | 30.00 | 10.00 | (I) | 65 | 30.4 | 11.23 |
| 8 | 50 | 37.5 | 12.5 | (I) | 65 | 29.5 | 30.12 |
| 9 | 10 | 7.50 | 2.50 | None | 65 | 56.0 | 2.32 |
| 10 | 10 | 7.50 | 2.50 | (II) | 65 | 22.4 | 2.65 |

[Table 2]

| Cyan composition Preparation Examples | Aqueous organic solvent | | | Surfactant | Average diameter | Surface tension | Viscosity |
|---|---|---|---|---|---|---|---|
| | Total | 1,3-butanediol | glycerol | | | | |
| | Wt% | wt% | wt% | | nm | mN/m | mPa·s |
| 1 | 10 | 7.50 | 2.50 | (I) | 86 | 33.0 | 2.60 |
| 2 | 10 | 7.50 | 2.50 | (I) | 63 | 33.0 | 2.60 |
| 3 | 10 | 7.50 | 2.50 | (I) | 43 | 32.5 | 2.69 |
| 4 | 10 | 7.50 | 2.50 | (I) | 26 | 34.4 | 2.99 |
| 5 | 5 | 3.75 | 1.25 | (I) | 63 | 34.4 | 1.92 |
| 6 | 20 | 15.00 | 5.00 | (I) | 63 | 33.5 | 5.12 |
| 7 | 40 | 30.00 | 10.00 | (I) | 63 | 32.0 | 13.7 |
| 8 | 50 | 37.5 | 12.5 | (I) | 63 | 31.4 | 31.0 |
| 9 | 10 | 7.50 | 2.50 | None | 63 | 57.5 | 2.46 |
| 10 | 10 | 7.50 | 2.50 | (II) | 63 | 23.6 | 2.89 |

[Table 3]

| Magenta composition Preparation Examples | Aqueous organic solvent | | | Surfactant | Average diameter | Surface tension | Viscosity |
|---|---|---|---|---|---|---|---|
| | Total | 1,3-butanediol | glycerol | | | | |
| | wt% | wt% | wt% | | nm | mN/m | mPa·s |
| 1 | 10 | 7.50 | 2.50 | (I) | 105 | 31.8 | 2.55 |
| 2 | 10 | 7.50 | 2.50 | (I) | 69 | 31.8 | 2.55 |
| 3 | 10 | 7.50 | 2.50 | (I) | 47 | 31.2 | 2.67 |
| 4 | 10 | 7.50 | 2.50 | (I) | 29 | 32.0 | 2.91 |
| 5 | 5 | 3.75 | 1.25 | (I) | 69 | 32.0 | 1.82 |
| 6 | 20 | 15.00 | 5.00 | (I) | 69 | 31.6 | 4.96 |
| 7 | 40 | 30.00 | 10.00 | (I) | 69 | 29.6 | 12.3 |
| 8 | 50 | 37.5 | 12.5 | (I) | 69 | 28.6 | 31.3 |
| 9 | 10 | 7.50 | 2.50 | None | 69 | 54.3 | 2.44 |
| 10 | 10 | 7.50 | 2.50 | (II) | 69 | 22.0 | 2.77 |

[Table 4]

| | Discharge velocity (m/s) | | | Number of abnormal nozzles | | | Image quality evaluation | Nozzle surface observation |
|---|---|---|---|---|---|---|---|---|
| | C | M | Y | C | M | Y | | |
| Example 1 | 10 | 10 | 10 | 2 | 2 | 3 | 3 | Little deposition |
| Example 2 | 10 | 10 | 10 | 1 | 1 | 1 | 4 | Minute deposition |
| Example 3 | 10 | 10 | 10 | 0 | 0 | 0 | 5 | No deposition |

(continued)

| | Discharge velocity (m/s) | | | Number of abnormal nozzles | | | Image quality evaluation | Nozzle surface observation |
|---|---|---|---|---|---|---|---|---|
| | C | M | Y | C | M | Y | | |
| Example 4 | 10 | 10 | 10 | 13 | 16 | 15 | 2 | Minute deposition |
| Example 5 | 10 | 10 | 10 | 4 | 3 | 2 | 3 | Minute deposition |
| Example 6 | 10 | 10 | 10 | 3 | 4 | 3 | 3 | Minute deposition |
| Example 7 | 10 | 10 | 10 | 18 | 21 | 22 | 2 | Minute deposition |
| Example 8 | 10 | 10 | 10 | 15 | 20 | 17 | 2 | Minute deposition |
| Example 9 | 10 | 10 | 10 | 11 | 14 | 16 | 2 | Minute deposition Bleeding from nozzle |
| Comparative Example 1 | 10 | 10 | 10 | 65 | 77 | 89 | 1 | Large deposition |
| Note: 150 nozzles are provided for each color. C is cyan, M magenta, and Y yellow. | | | | | | | | |

[Table 5]

| Cyan | Recording composition No. | Average diameter Dp (nm) | Nozzle diameter (μm) | Dp/Dn (in μm) | Discharge velocity (m/s) | Number of abnormal nozzles | Image quality evaluation | Nozzle surface observation |
|---|---|---|---|---|---|---|---|---|
| Comparative Example 2 | Cyan 1 | 86 | 30 | 0.00287 | 10 | 65 | 1 | Large deposition |
| Example 10 | Cyan 2 | 63 | 30 | 0.00210 | 10 | 2 | 3 | Little deposition |
| Example 11 | Cyan 3 | 43 | 30 | 0.00143 | 10 | 1 | 4 | Minute deposition |
| Example 12 | Cyan 4 | 26 | 30 | 0.00087 | 10 | 0 | 5 | No deposition |
| Comparative Example 3 | Cyan 1 | 86 | 20 | 0.00430 | 10 | 98 | 1 | Large deposition |
| Comparative Example 14 | Cyan 2 | 63 | 20 | 0.00315 | 10 | 20 | 1 | Little deposition |
| Example 13 | Cyan 3 | 43 | 20 | 0.00215 | 10 | 2 | 3 | Minute deposition |
| Example 14 | Cyan 4 | 26 | 20 | 0.00130 | 10 | 0 | 5 | No deposition |
| Comparative Example 5 | Cyan 1 | 86 | 10 | 0.00860 | 10 | 120 | 1 | Large deposition |
| Comparative Example 6 | Cyan 2 | 63 | 10 | 0.00630 | 10 | 55 | 1 | Little deposition |
| Comparative Example 7 | Cyan 3 | 43 | 10 | 0.00430 | 10 | 30 | 1 | Minute deposition |
| Example 15 | Cyan 4 | 26 | 10 | 0.00260 | 10 | 0 | 5 | No deposition |

[Table 6]

| Magenta | Recording composition No. | Average diameter Dp (nm) | Nozzle diameter (μm) | Dp/Dn (in μm) | Discharge velocity (m/s) | Number of abnormal nozzles | Image quality evaluation | Nozzle surface observation |
|---|---|---|---|---|---|---|---|---|
| Comparative Example 8 | Magenta 1 | 105 | 30 | 0.00350 | 10 | 77 | 1 | Large deposition |
| Example 16 | Magenta 2 | 69 | 30 | 0.00230 | 10 | 2 | 3 | Little deposition |
| Example 17 | Magenta 3 | 47 | 30 | 0.00157 | 10 | 1 | 4 | Minute deposition |
| Example 18 | Magenta 4 | 29 | 30 | 0.00097 | 10 | 0 | 5 | No deposition |
| Comparative Example 9 | Magenta 1 | 105 | 20 | 0.00525 | 10 | 99 | 1 | Large deposition |
| Comparative Example 10 | Magenta 2 | 69 | 20 | 0.00345 | 10 | 21 | 1 | Little deposition |
| Example 19 | Magenta 3 | 47 | 20 | 0.00235 | 10 | 2 | 3 | Minute deposition |
| Example 20 | Magenta 4 | 29 | 20 | 0.00145 | 10 | 0 | 5 | No deposition |
| Comparative Example 11 | Magenta 1 | 105 | 10 | 0.01050 | 10 | 113 | 1 | Large deposition |
| Comparative Example 12 | Magenta 2 | 69 | 10 | 0.00690 | 10 | 43 | 1 | Little deposition |
| Comparative Example 13 | Magenta 3 | 47 | 10 | 0.00470 | 10 | 29 | 1 | Minute deposition |
| Example 21 | Magenta 4 | 29 | 10 | 0.00290 | 10 | 0 | 5 | No deposition |

[Table 7]

| Yellow | Recording composition No. | Average diameter Dp (nm) | Nozzle diameter (μm) | Dp/Dn (in μm) | Discharge velocity (m/s) | Number of abnormal nozzles | Image quality evaluation | Nozzle surface observation |
|---|---|---|---|---|---|---|---|---|
| Comparative Example 14 | Yellow 1 | 95 | 30 | 0.00317 | 10 | 89 | 1 | Large deposition |
| Example 22 | Yellow 2 | 65 | 30 | 0.00217 | 10 | 3 | 3 | Little deposition |
| Example 23 | Yellow 3 | 48 | 30 | 0.00160 | 10 | 1 | 4 | Minute deposition |
| Example 24 | Yellow 4 | 27 | 30 | 0.00090 | 10 | 0 | 5 | No deposition |
| Comparative Example 15 | Yellow 1 | 95 | 20 | 0.00475 | 10 | 101 | 1 | Large deposition |
| Comparative Example 16 | Yellow 2 | 65 | 20 | 0.00325 | 10 | 23 | 1 | Little deposition |
| Example 25 | Yellow 3 | 48 | 20 | 0.00240 | 10 | 2 | 3 | Minute deposition |
| Example 26 | Yellow 4 | 27 | 20 | 0.00135 | 10 | 0 | 5 | No deposition |
| Comparative Example 17 | Yellow 1 | 95 | 10 | 0.00950 | 10 | 125 | 1 | Large deposition |
| Comparative Example 18 | Yellow 2 | 65 | 10 | 0.00650 | 10 | 55 | 1 | Little deposition |
| Comparative Example 19 | Yellow 3 | 48 | 10 | 0.00480 | 10 | 25 | 1 | Minute deposition |
| Example 27 | Yellow 4 | 27 | 10 | 0.00270 | 10 | 0 | 5 | No deposition |

[Table 8]

| Cyan | Recording composition No. | Average diameter Dp (nm) | Nozzle diameter (μm) | Dp/Dn (in μm) | discharge velocity (m/s) | Number of abnormal nozzles | Image quality evaluation | Nozzle surface observation |
|---|---|---|---|---|---|---|---|---|
| Example 28 | Cyan 2 | 63 | 30 | 0.00210 | 1 | 15 | 2 | Little deposition |
| Example 29 | Cyan 2 | 63 | 30 | 0.00210 | 2 | 10 | 2 | Little deposition |
| Example 30 | Cyan 2 | 63 | 30 | 0.00210 | 4 | 3 | 3 | Little deposition |
| Example 31 | Cyan 2 | 63 | 30 | 0.00210 | 10 | 2 | 3 | Little deposition |
| Example 32 | Cyan 2 | 63 | 30 | 0.00210 | 20 | 0 | 5 | Little deposition |
| Example 33 | Cyan 2 | 63 | 30 | 0.00210 | 25 | 1 | 4 | Little deposition |
| Example 34 | Cyan 2 | 63 | 30 | 0.00210 | 30 | 10 | 2 | Little deposition |
| Example 35 | Cyan 2 | 63 | 30 | 0.00210 | 40 | 13 | 2 | Little deposition |
| Example 36 | Cyan 3 | 43 | 30 | 0.00143 | 1 | 2 | 3 | Minute deposition |
| Example 37 | Cyan 3 | 43 | 30 | 0.00143 | 2 | 1 | 4 | Minute deposition |
| Example 38 | Cyan 3 | 43 | 30 | 0.00143 | 4 | 1 | 4 | Minute deposition |
| Example 39 | Cyan 3 | 43 | 30 | 0.00143 | 10 | 1 | 4 | Minute deposition |
| Example 40 | Cyan 3 | 43 | 30 | 0.00143 | 20 | 0 | 5 | Minute deposition |
| Example 41 | Cyan 3 | 43 | 30 | 0.00143 | 25 | 0 | 5 | Minute deposition |
| Example 42 | Cyan 3 | 43 | 30 | 0.00143 | 30 | 1 | 4 | Minute deposition |
| Example 43 | Cyan 3 | 43 | 30 | 0.00143 | 40 | 2 | 3 | Minute deposition |
| Example 44 | Cyan 4 | 26 | 30 | 0.00087 | 1 | 1 | 4 | No deposition |
| Example 45 | Cyan 4 | 26 | 30 | 0.00087 | 2 | 0 | 5 | No deposition |
| Example 46 | Cyan 4 | 26 | 30 | 0.00087 | 4 | 0 | 5 | No deposition |
| Example 47 | Cyan 4 | 26 | 30 | 0.00087 | 10 | 0 | 5 | No deposition |
| Example 48 | Cyan 4 | 26 | 30 | 0.00087 | 20 | 0 | 5 | No deposition |
| Example 49 | Cyan 4 | 26 | 30 | 0.00087 | 25 | 0 | 5 | No deposition |
| Example 50 | Cyan 4 | 26 | 30 | 0.00087 | 30 | 0 | 5 | No deposition |

(continued)

| Cyan | Recording composition No. | Average diameter Dp (nm) | Nozzle diameter (μm) | Dp/Dn (in μm) | discharge velocity (m/s) | Number of abnormal nozzles | Image quality evaluation | Nozzle surface observation |
|---|---|---|---|---|---|---|---|---|
| Example 51 | Cyan 4 | 26 | 30 | 0.00087 | 40 | 1 | 4 | No deposition |

Industrial Applicability

(1) By using a recording composition containing a colorant with an average diameter of 70 nm or less, deposition of the colorant near the nozzle can be inhibited, and, since high-speed printing with one-pass printing, in which rows of dots aligned along the main scanning direction are formed in one scan, is possible, vivid images without white streaks can be obtained at high speed.
(2) By using a recording composition containing a colorant with an average diameter of 50 nm or less, deposition of the colorant near the nozzle can further be inhibited so that even in the case where high-speed printing was performed with one-pass printing, images without white streaks and with little image density fluctuation can be obtained.
(3) By using a recording composition containing a colorant with an average diameter of 30 nm or less, deposition of the colorant near the nozzle can be inhibited even further so that even in the case where high-speed printing was performed with one-pass printing, images without white streaks and with image density fluctuation further restricted can be obtained.
(4) By adjusting the content of the aqueous organic solvent in relation to the total amount of recording composition to 10% by weight or more, even if the volatile component of the recording composition evaporates, it will not dry and therefore can inhibit the deposition of the colorant near the nozzle.
(5) By limiting the static surface tension of the recording composition at 25 °C to a range of from 25 mN/m to 50 mN/m, a certain amount of bleeding of the recording composition can be effected while maintaining discharge stability. As a result, even if some discharge bending occurs, the recording composition bleeds to the portion which could turn into a white streak, thereby inhibiting the occurrence of white streaks.
(6) By limiting the viscosity of the recording composition at 25 °C to a range of from 2 mPa·s to 30 mPa·s, a certain amount of bleeding of the recording composition can be effected while maintaining discharge stability. As a result, even if some discharge bending occurs, the recording composition bleeds to the portion which could turn into a white streak, thereby inhibiting the occurrence of white streaks.
(7) By using a pigment as the colorant, high water resistance and high light fastness can be achieved simultaneously.
(8) By selecting the colorant to be one of cyan, magenta, yellow, red, green, and blue, vivid color images can be obtained.
(9) By using the spraying means which discharges by thermal energy, images of high resolution can be obtained.
(10) By using the process described above, it is possible to obtain an image forming apparatus which forms vivid images without white streaks and image density fluctuation and recorded matters with such images.

**Claims**

**1.** An image forming apparatus (1), comprising:

a recording composition containing a colorant in a dispersed state, the colorant containing colorant particles; and a recording head (3, 90) containing the recording composition, which recording head splay the recording composition toward a recording medium (91),

wherein the image forming apparatus forms an image on the recording medium by controlling the recording head to scan the recording medium relatively, and average diameter of the colorant particles is 70 nm or less, **characterized in that** a row of dots of the image aligned along a main scanning direction is formed with one scan, and the recording head has a discharge orifice having an opening, and the average diameter Dp (μm) of the colorant particles and a size Dn (μm) of the opening of the discharge orifice satisfy the formula:

$$Dp / Dn \leq 0.003.$$

**2.** The image forming apparatus according to Claim 1, wherein the average diameter of the colorant particles is 50 nm or less.

**3.** The image forming apparatus according to Claim 1, wherein the average diameter of the color ant particles is 30 nm or less.

**4.** The image forming apparatus according to any one of Claims 1 to 3, wherein discharge velocity V (m/s) satisfies the formula:

$$2.0 \leq V \leq 30.0.$$

**5.** The image forming apparatus according to any one of Claims 1 to 4, wherein static surface tension of the recording composition at 25 °C is from 25 mN/m to 50 mN/m.

**6.** The image forming apparatus according to any one of Claims 1 to 5, wherein viscosity of the recording composition at 25 °C is from 2 mPa·s to 30 mPa·s.

**7.** The image forming apparatus according to any one of Claims 1 to 6, wherein spraying is performed by discharging the recording composition by thermal energy.

**8.** An image forming process, comprising the steps of:

providing a recording head (3, 90) containing a recording composition, which recording head sprays the recording composition toward a recording medium (91); and
controlling the recording head to scan the recording medium relatively, so that an image is formed on the recording medium, wherein the recording composition contains a colorant in a dispersed state, the colorant having colorant particles, and average diameter of the colorant particles is 70 nm or less, **characterized in that** a row of dots of the image aligned along a main scanning direction is formed with one scan, and the recording head has a discharge orifice having an opening, and the average diameter Dp (μm) of the colorant particles and a size Dn (μm) of the opening of the discharge oriffice satisfy the formula:

$$Dp / Dn \leq 0.003.$$

**9.** The image forming process according to Claim 8, wherein the average diameter of the colourant particles is 50 nm or less.

**10.** The image forming process according to Claim 8, wherein the average diameter of the colourant particles is 30 nm or less.

**11.** The image forming process according to any one of Claims 8 to 10, wherein discharge velocity V (m/s) satisfies the formula:

$$2.0 \leq V \leq 30.0.$$

**12.** The image forming process according to any one of Claims 8 to 11, wherein static surface tension of the recording composition at 25 °C is from 25 mN/m to 50 mN/m.

**13.** The image forming process according to any one of Claims 8 to 12, wherein viscosity of the recording composition at 25 °C is from 2 mPa·s to 30 mPa·s.

**14.** The image forming process according to any one of Claims 8 to 13, wherein spraying is performed by discharging the recording composition by thermal energy.

**Patentansprüche**

**1.** Bilderzeugungsvorrichtung (1) umfassend:

eine Aufzeichnungszusammensetzung, enthaltend ein Farbgebungsmittel in einem dispergierten Zustand, wobei das Farbgebungsmittel Farbgebungsmittelteilchen enthält; und

einen die Aufzeichnungszusammensetzung enthaltenden Aufzeichnungskopf (3, 90), welcher Aufzeichnungskopf die Aufzeichnungszusammensetzung in Richtung eines Aufzeichnungsmediums (91) sprüht,
wobei die Bilderzeugungsvorrichtung ein Bild auf dem Aufzeichnungsmedium erzeugt, indem der Aufzeichnungskopf gesteuert wird, das Aufzeichnungsmedium relativ zu scannen, und der mittlere Durchmesser der Farbgebungsmittelteilchen 70 nm oder weniger ist, **dadurch gekennzeichnet,**
**dass** eine Zeile von entlang einer Hauptscanrichtung aneinander gereihten Punkten des Bildes mit einem Scan erzeugt wird, und der Aufzeichnungskopf eine Auslassdüse mit einer Öffnung aufweist und der mittlere Durchmesser Dp (μm) der Farbgebungsmittelteilchen und die Größe Dn (μm) der Öffnung der Auslassdüse die Formel erfüllen:

$$Dp/Dn \leq 0{,}003$$

2. Bilderzeugungsvorrichtung gemäß Anspruch 1, wobei der mittlere Durchmesser der Farbgebungsmittelteilchen 50 nm oder weniger ist.

3. Bilderzeugungsvorrichtung gemäß Anspruch 1, wobei der mittlere Durchmesser der Farbgebungsmittelteilchen 30 nm oder weniger ist.

4. Bilderzeugungsvorrichtung gemäß irgendeinem der Ansprüche 1 bis 3, wobei die Auslassgeschwindigkeit V (m/s) die Formel erfüllt:

$$2{,}0 \leq V \leq 30{,}0.$$

5. Bilderzeugungsvorrichtung gemäß irgendeinem der Ansprüche 1 bis 4, wobei die statische Oberflächenspannung der Aufzeichnungszusammensetzung bei 25°C 25 mN/m bis 50 mN/m ist.

6. Bilderzeugungsvorrichtung gemäß irgendeinem der Ansprüche 1 bis 5, wobei die Viskosität der Aufzeichnungszusammensetzung bei 25°C 2 mPa·s bis 30 mPa·s ist.

7. Bilderzeugungsvorrichtung gemäß irgendeinem der Ansprüche 1 bis 6, wobei das Sprühen durch Austragen der Aufzeichnungszusammensetzung mittels thermischer Energie durchgeführt wird.

8. Bilderzeugungsverfahren, umfassend die Schritte von:

Bereitstellen eines eine Aufzeichnungszusammensetzung enthaltenden Aufzeichnungskopfes (3, 90), welcher Aufzeichnungskopf die Aufzeichnungszusammensetzung in Richtung eines Aufzeichnungsmediums (91) sprüht; und
Steuern des Aufzeichnungskopfes, das Aufzeichnungsmedium relativ zu scannen, so dass auf dem Aufzeichnungsmedium ein Bild erzeugt wird, wobei die Aufzeichnungszusammensetzung ein Farbgebungsmittel in einem dispergierten Zustand enthält, wobei das farbgebende Mittel Farbgebungsmittelteilchen aufweist und der mittlere Durchmesser der Farbgebungsmittelteilchen 70 nm oder weniger ist, **dadurch gekennzeichnet,**
**dass** eine Zeile von entlang einer Hauptscanrichtung aneinander gereihten Punkten des Bildes mit einem Scan erzeugt wird, und der Aufzeichnungskopf eine Auslassdüse mit einer Öffnung aufweist und der mittlere Durchmesser Dp (μm) der Farbgebungsmittelteilchen und die Größe Dn (μm) der Öffnung der Auslassdüse die Formel erfüllen:

$$Dp/Dn \leq 0{,}003$$

9. Bilderzeugungsverfahren gemäß Anspruch 8, wobei der mittlere Durchmesser der Farbgebungsmittelteilchen 50 nm oder weniger ist.

10. Bilderzeugungsverfahren gemäß Anspruch 8, wobei der mittlere Durchmesser der Farbgebungsmittelteilchen 30 nm oder weniger ist.

**11.** Bilderzeugungsverfahren gemäß irgendeinem der Ansprüche 8 bis 10, wobei die Auslassgeschwindigkeit V (m/s) die Formel erfüllt:

$$2{,}0 \leq V \leq 30{,}0.$$

**12.** Bilderzeugungsverfahren gemäß irgendeinem der Ansprüche 8 bis 11, wobei die statische Oberflächenspannung der Aufzeichnungszusammensetzung bei 25°C 25 mN/m bis 50 mN/m ist.

**13.** Bilderzeugungsverfahren gemäß irgendeinem der Ansprüche 8 bis 12, wobei die Viskosität der Aufzeichnungszusammensetzung bei 25°C 2 mPa·s bis 30 mPa·s ist.

**14.** Bilderzeugungsverfahren gemäß irgendeinem der Ansprüche 8 bis 13, wobei das Sprühen durch Austragen der Aufzeichnungszusammensetzung mittels thermischer Energie durchgeführt wird.

**Revendications**

**1.** Dispositif de formation d'image (1), comprenant :

une composition d'enregistrement contenant un colorant dans un état dispersé, le colorant contenant des particules de colorant ; et
une tête d'enregistrement (3, 90) contenant la composition d'enregistrement, tête d'enregistrement qui pulvérise la composition d'enregistrement vers un support d'enregistrement (91),
dans lequel le dispositif de formation d'image forme une image sur le support d'enregistrement en commandant la tête d'enregistrement pour balayer le support d'enregistrement de manière relative et le diamètre moyen des particules de colorant est inférieur ou égal à 70 nm, **caractérisé en ce qu'**une rangée de points de l'image alignés dans la direction principale de balayage est formée avec un balayage et la tête d'enregistrement comporte un orifice de décharge présentant une ouverture, et le diamètre moyen Dp (μm) des particules de colorant et la dimension Dn (μm) de l'ouverture de l'orifice de décharge satisfont à la formule suivante :

$$Dp / Dn \leq 0{,}003.$$

**2.** Dispositif de formation d'image selon la revendication 1, dans lequel le diamètre moyen des particules de colorant est inférieur ou égal à 50 nm.

**3.** Dispositif de formation d'image selon la revendication 1, dans lequel le diamètre moyen des particules de colorant est inférieur ou égal à 30 nm.

**4.** Dispositif de formation d'image selon l'une quelconque des revendications 1 à 3, dans lequel la vitesse de décharge V (m/s) satisfait à la formule suivante :

$$2{,}0 \leq V \leq 30{,}0.$$

**5.** Dispositif de formation d'image selon l'une quelconque des revendications 1 à 4, dans lequel la tension superficielle statique de la composition d'enregistrement à 25°C est comprise entre 25 mN/m et 50 mN/m.

**6.** Dispositif de formation d'image selon l'une quelconque des revendications 1 à 5, dans lequel la viscosité de la composition d'enregistrement à 25°C est comprise entre 2 mPa.s et 30 mPa.s.

**7.** Dispositif de formation d'image selon l'une quelconque des revendications 1 à 6, dans lequel la pulvérisation est réalisée par décharge de la composition d'enregistrement par de l'énergie thermique.

**8.** Processus de formation d'image comprenant les étapes consistant à :

fournir une tête d'enregistrement (3, 90) contenant une composition d'enregistrement, tête d'enregistrement qui pulvérise la composition d'enregistrement vers un support d'enregistrement (91) ; et
commander la tête d'enregistrement pour balayer le support d'enregistrement de manière relative, de façon à former une image sur le support d'enregistrement, dans lequel la composition d'enregistrement contient un colorant dans un état dispersé, le colorant comportant des particules de colorant, et le diamètre moyen des particules de colorant est inférieur ou égal à 70 nm, **caractérisé en ce qu'**une rangée de points de l'image alignés dans la direction principale de balayage est formée avec un balayage et la tête d'enregistrement comporte un orifice de décharge comportant une ouverture, et le diamètre moyen Dp (μm) des particules de colorant et la dimension Dn (μm) de l'ouverture de l'orifice de décharge satisfont à la formule suivante :

$$Dp / Dn \leq 0{,}003.$$

**9.** Processus de formation d'image selon la revendication 8, dans lequel le diamètre moyen des particules de colorant est inférieur ou égal à 50 nm.

**10.** Processus de formation d'image selon la revendication 8, dans lequel le diamètre moyen des particules de colorant est inférieur ou égal à 30 nm.

**11.** Processus de formation d'image selon l'une quelconque des revendications 8 à 10, dans lequel la vitesse de décharge V (m/s) satisfait à la formule suivante :

$$2{,}0 \leq V \leq 30{,}0.$$

**12.** Processus de formation d'image selon l'une quelconque des revendications 8 à 11, dans lequel la tension superficielle statique de la composition d'enregistrement à 25°C est comprise entre 25 mN/m et 50 mN/m.

**13.** Processus de formation d'image selon l'une quelconque des revendications 8 à 12, dans lequel la viscosité de la composition d'enregistrement à 25°C est comprise entre 2 mPa.s et 30 mPa.s.

**14.** Processus de formation d'image selon l'une quelconque des revendications 8 à 13, dans lequel la pulvérisation est réalisée par décharge de la composition d'enregistrement par de l'énergie thermique.

FIG. 1

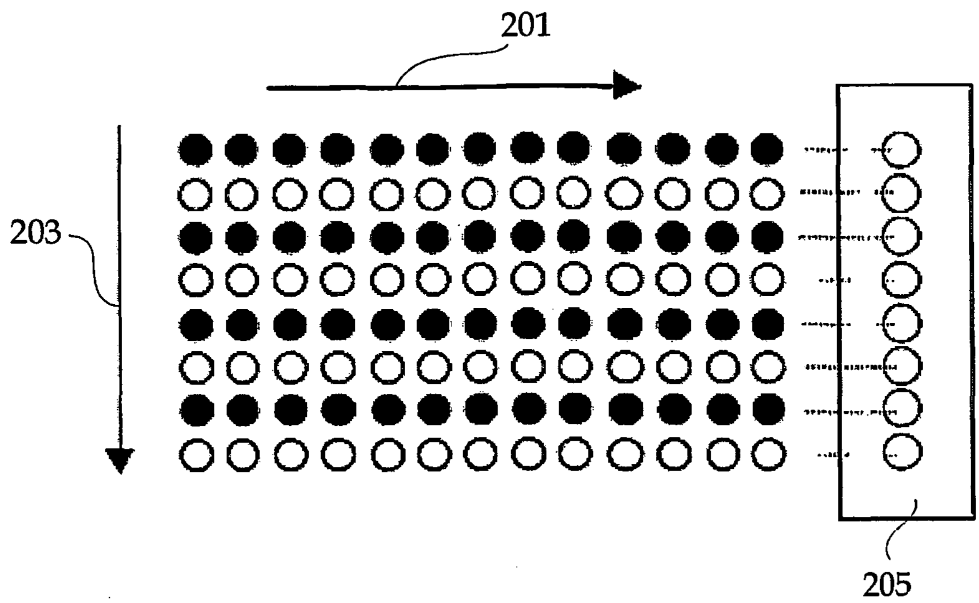


FIG. 2

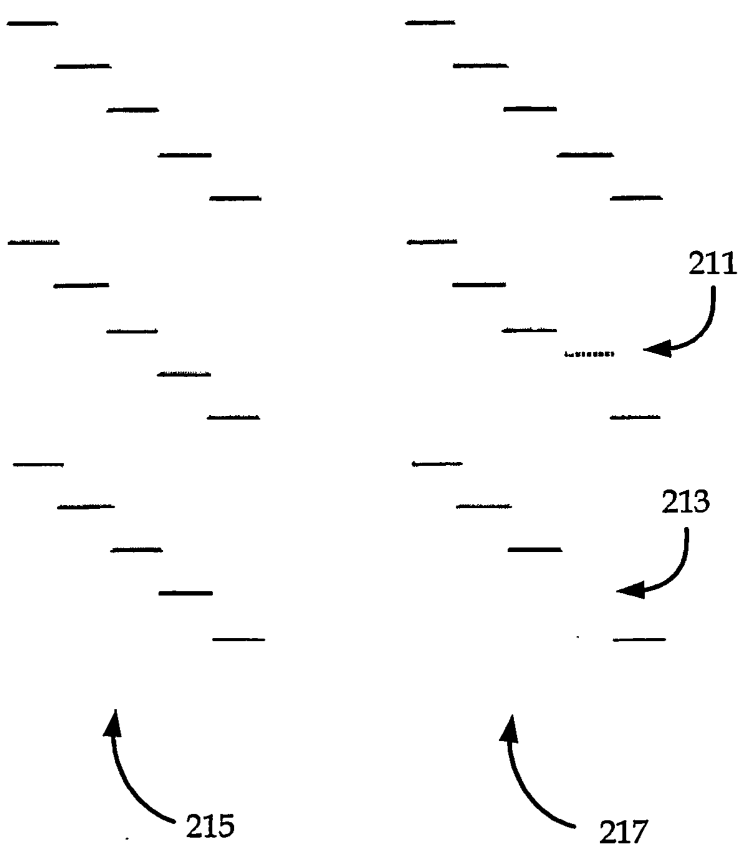

FIG. 3

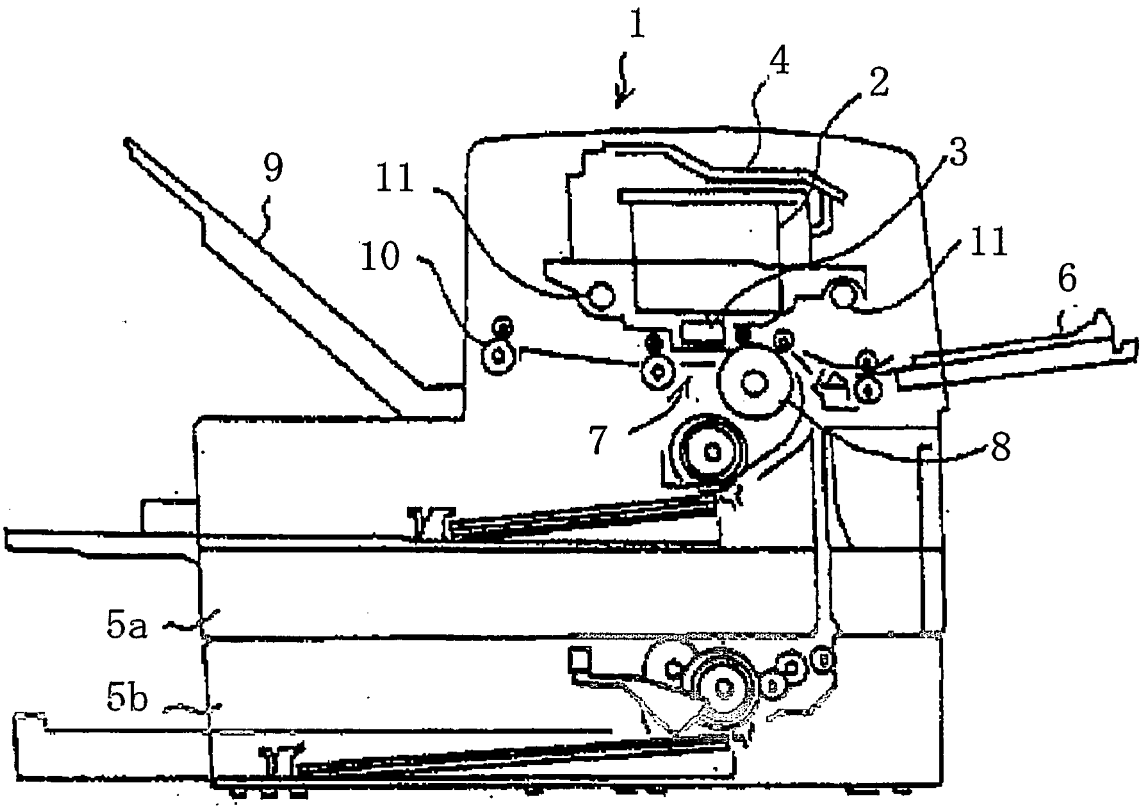

FIG. 4

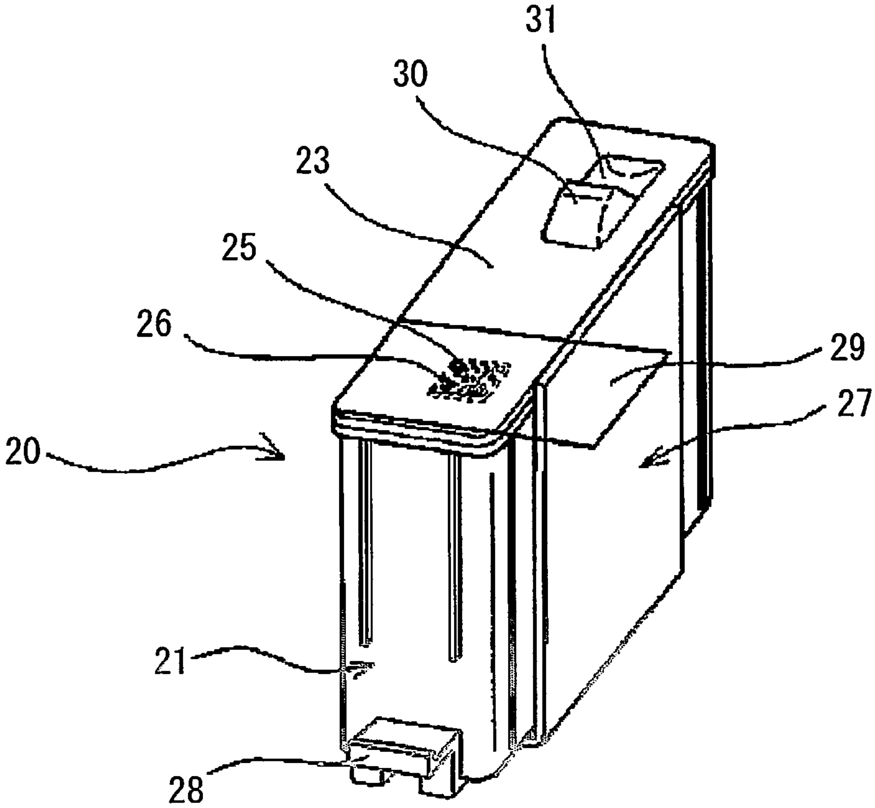


FIG. 5

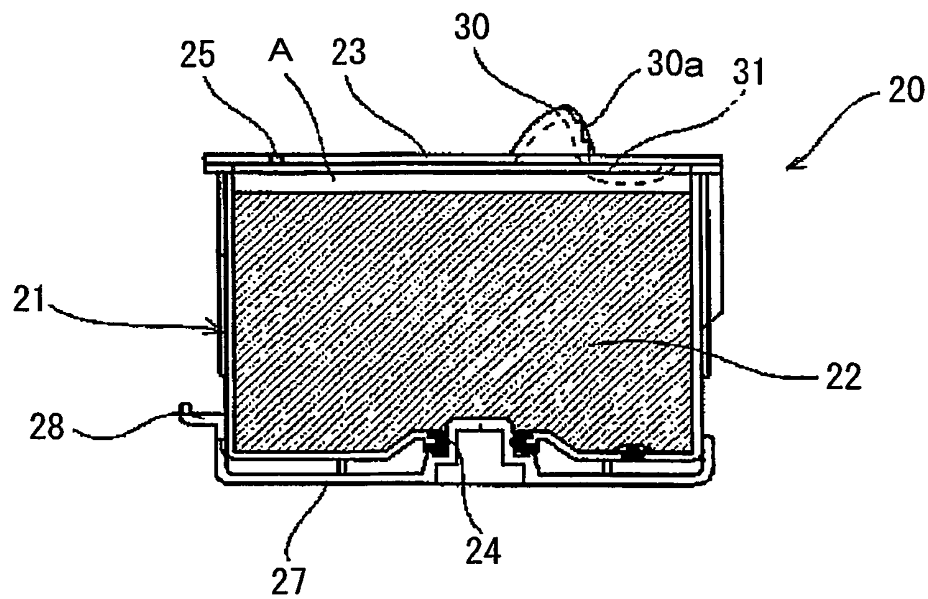

FIG. 6A

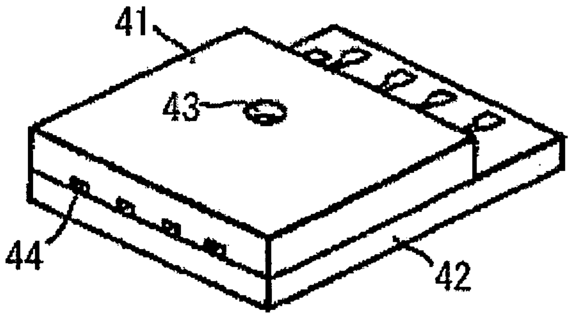


FIG. 6B

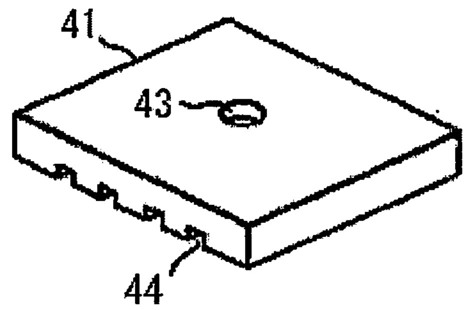


FIG. 6C

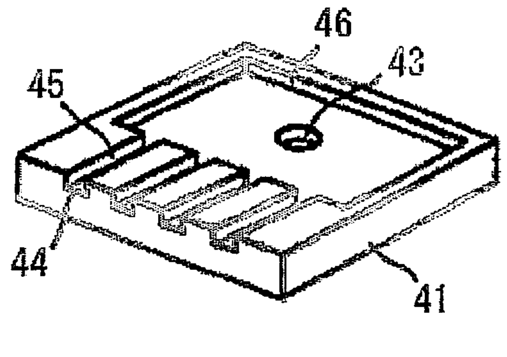


FIG. 6D

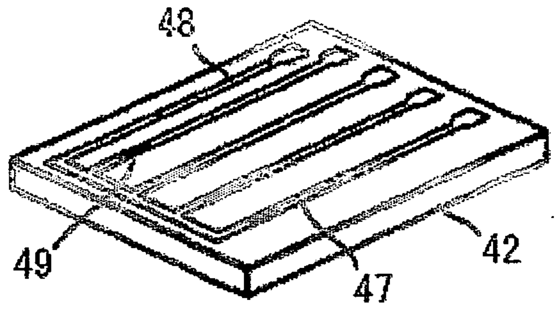

FIG. 7A

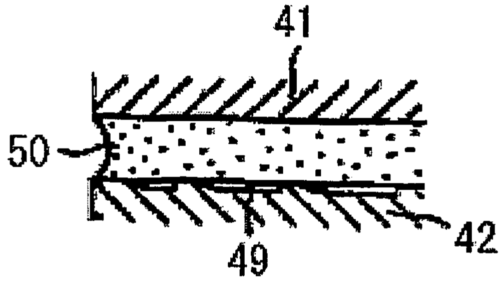


FIG. 7B

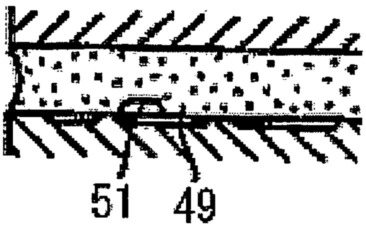


FIG. 7C

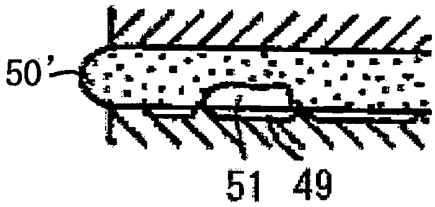


FIG. 7D

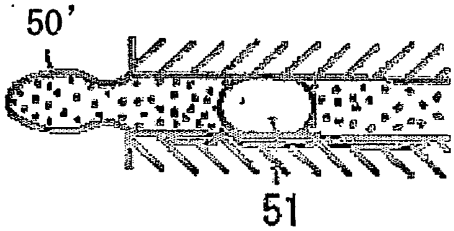


FIG. 7E

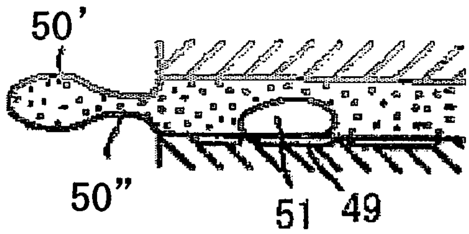


FIG. 7F

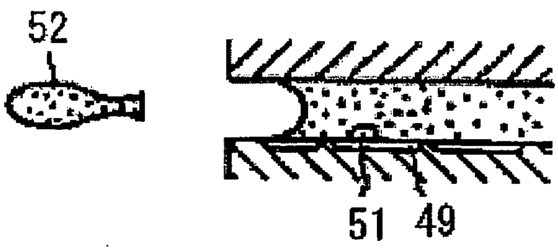


FIG. 7G

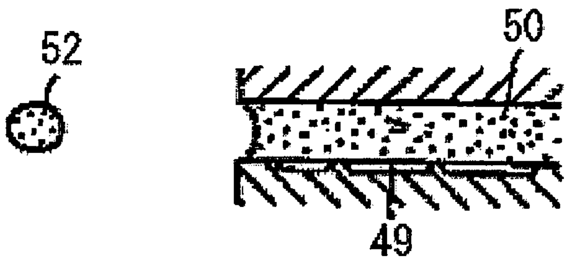

FIG. 8A

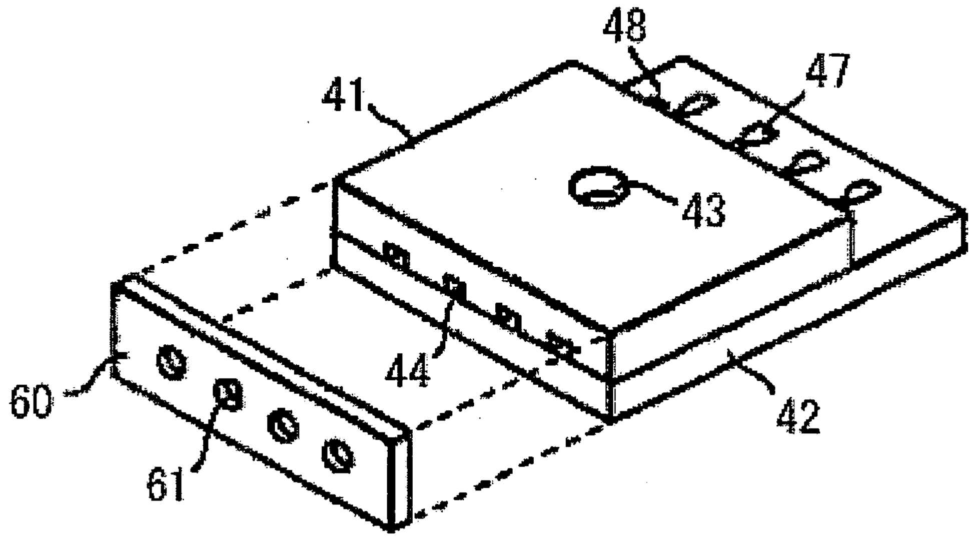


FIG. 8B

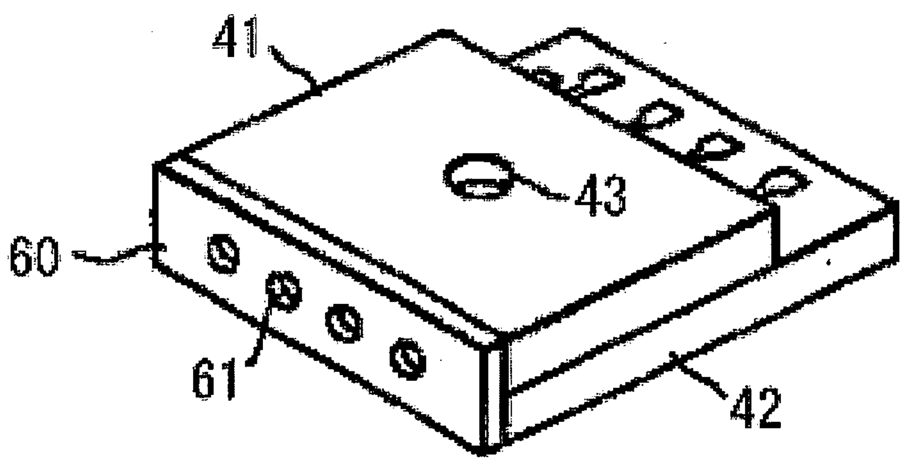

FIG. 9

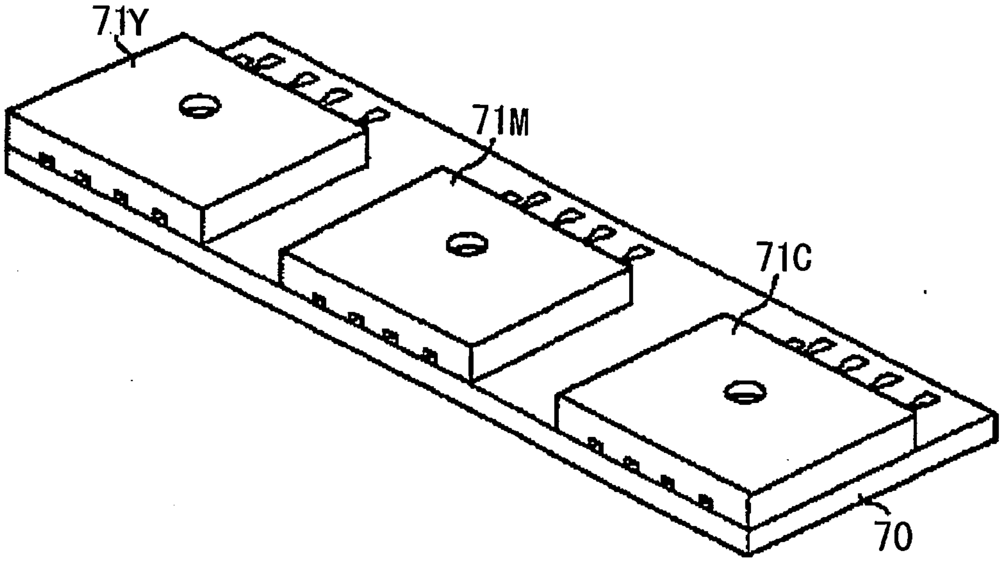


FIG. 10

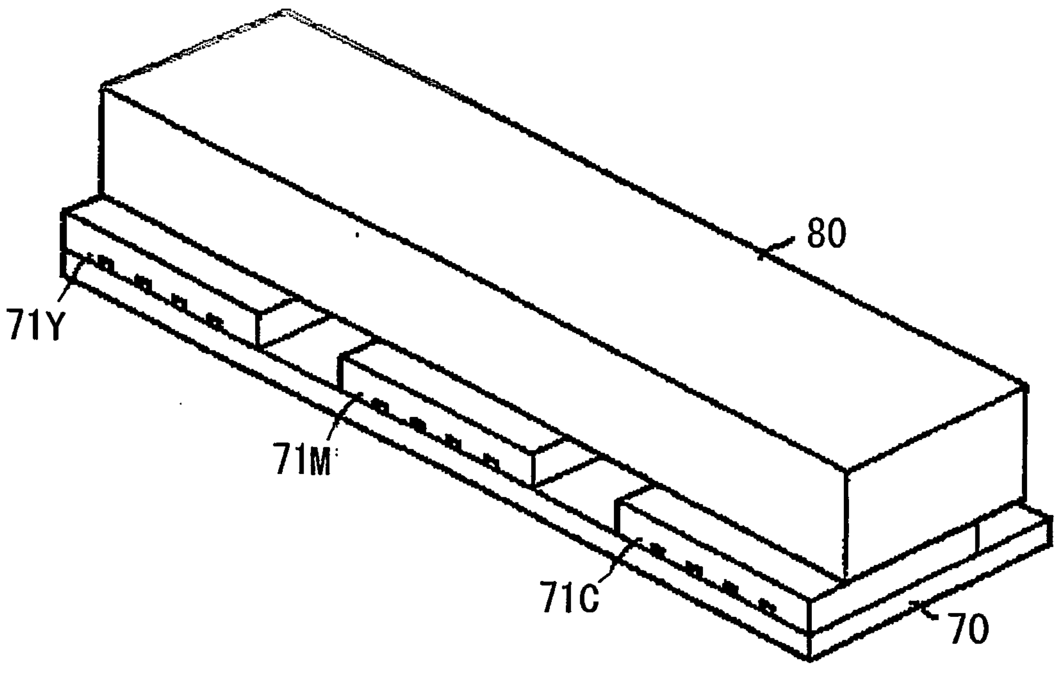

FIG. 11

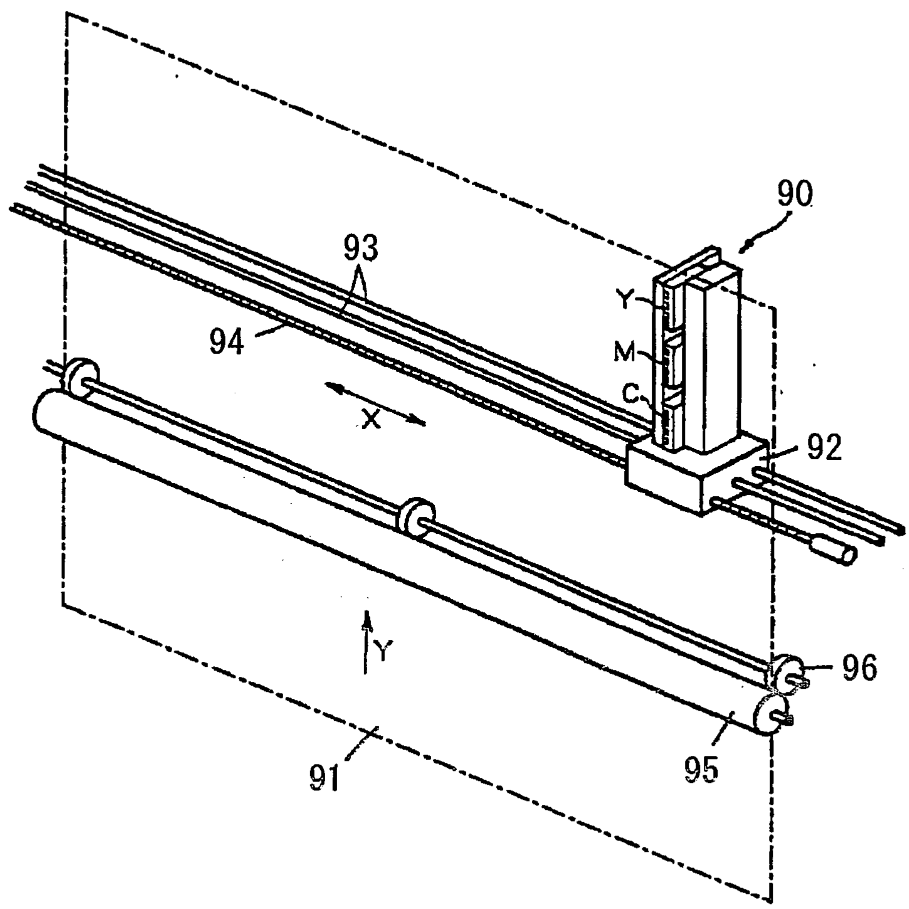


FIG. 12

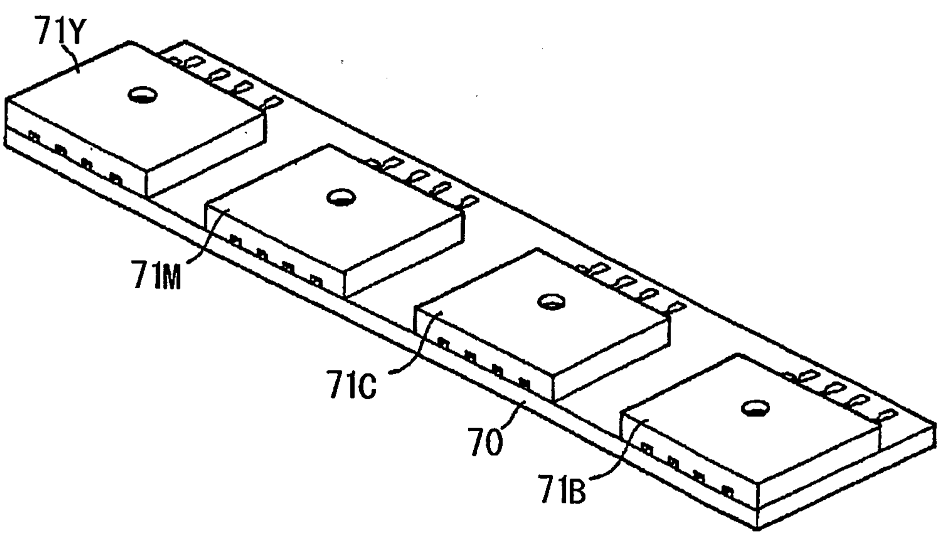

FIG. 13

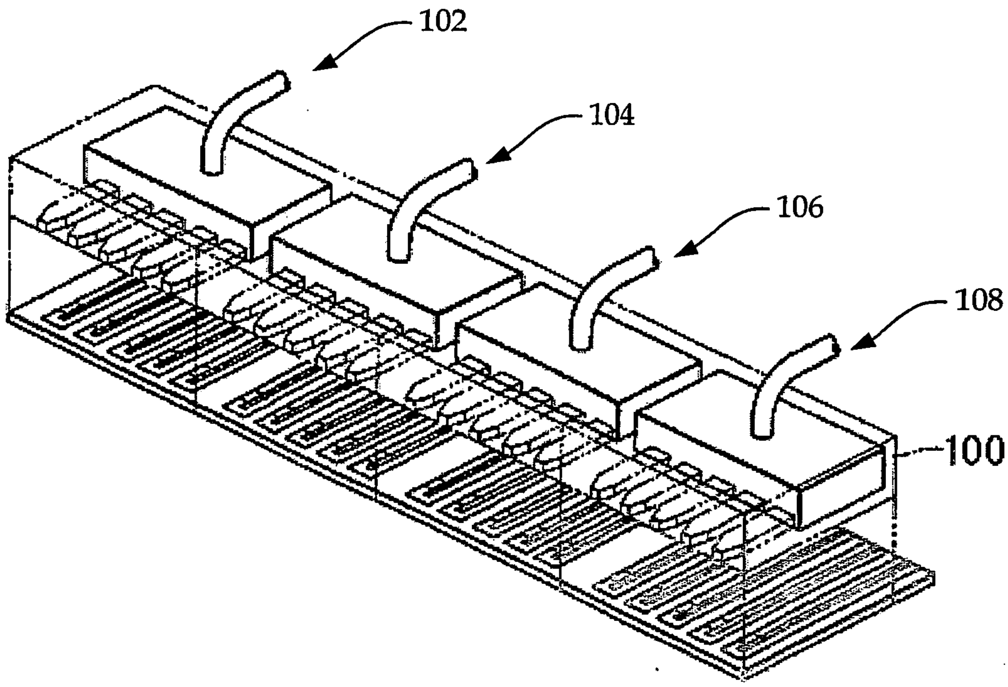


FIG. 14

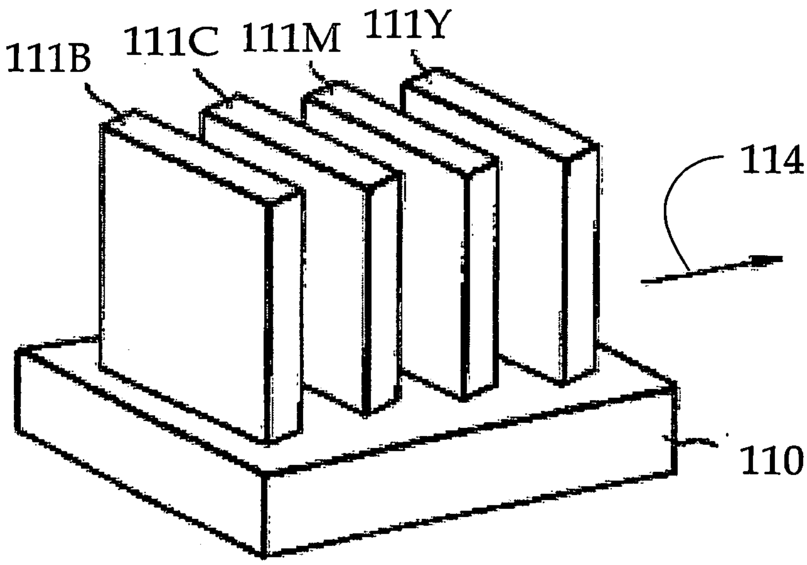

FIG. 15A

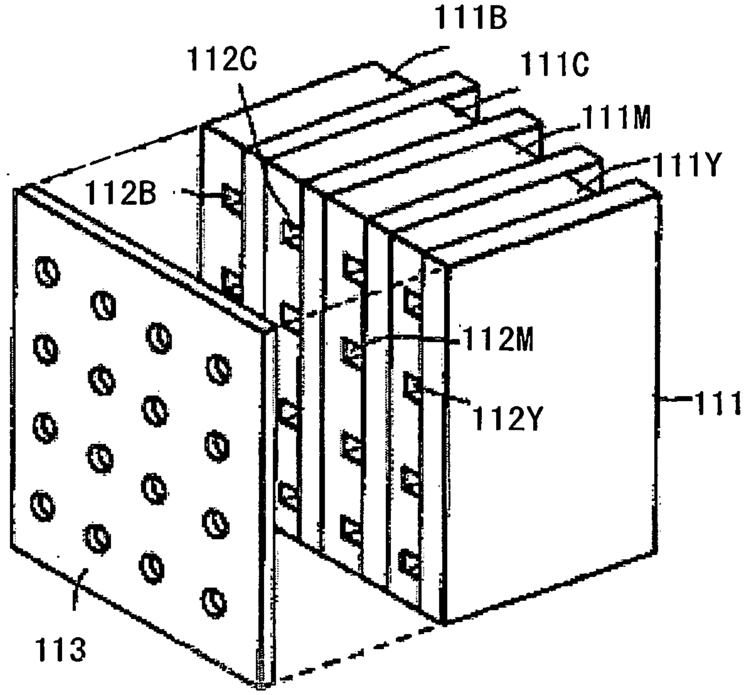


FIG. 15B

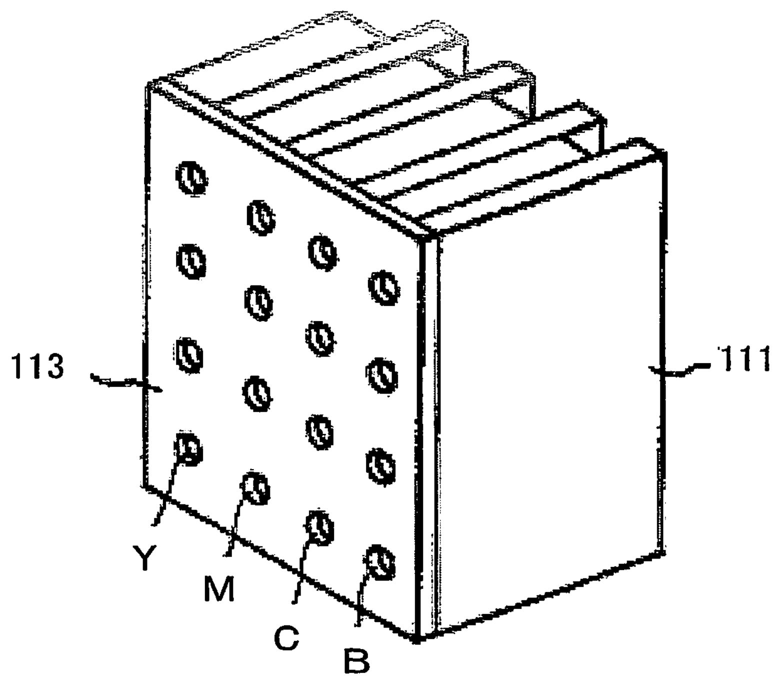

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8311379 A
- JP 8311380 A
- JP 9003374 A
- JP 9003375 A
- JP 2001287455 A
- JP 2001254033 A
- JP 2001239751 A
- JP 2001239744 A
- EP 1266942 A1
- US 6116711 A